# FASCICULE DE BREVET EUROPEEN

(11) **EP 0 511 882 B1**
(45) Date de publication et mention de la délivrance du brevet: **08.05.1996**
(21) Numéro de dépôt: 92400668.7
(22) Date de dépôt: 13.03.1992
(51) Int. Cl.: C08G 77/20, C08G 77/50, C08G 77/38, C08L 83/07, C08L 83/14

(54) **Polyorganosiloxanes à groupements cyclopentadienyles et/ou cyclopentadienylenes et/ou dicyclopentadienylènes, leurs préparations et leur utilisation dans des compositions réticulables en élastomères**
Cyclopentadienyl- und/oder Dicyclopentadienylengruppen enthaltende Polyorganosiloxane, ihre Herstellung und ihre Verwendung in zu Elastomeren vernetzbaren Zusammensetzungen
Cyclopentadienyl and/or dicyclopentadienylene groups- containing polyorganosiloxanes, their preparation and their use in curable elastomeric compositions

(30) Priorité: 30.04.1991 FR 9105648
(43) Date de publication de la demande: 04.11.1992
(73) Titulaire: RHONE-POULENC CHIMIE, F-92408 Courbevoie Cédex (FR)
(72) Inventeur: Frances, Jean-Marc, F-69100 Villeurbranne (FR); Leising, Frédéric, F-69440 Mornant (FR)
(74) Mandataire: Trolliet, Maurice

(56) Documents cités:
- EP-A- 0 259 711
- EP-A- 0 282 927
- EP-A- 0 423 688
- EP-A- 0 430 827
- US-A- 2 957 901
- US-A- 4 704 428

## Description

La présente invention concerne des polymères polyorganosiloxanes à fonctionnalité cyclopentadiényle et/ou cyclopentadiénylène et/ou dicyclopentadiénylène liée aux atomes de silicium par l'intermédiaire d'une rotule hydrocarbonée, leur préparation et leur utilisation dans des compositions silicone réticulables en élastomère, en particulier par l'humidité atmosphérique et/ou l'oxygène de l'air.

Le brevet US-A-2957901 décrit un silane ou un polysiloxane portant des cycles pentadiényle, mais ces derniers sont ici directement liés aux atomes de silicium.

Les polymères polyorganosiloxanes selon la présente invention sont caractérisés par le fait de comprendre un polyorganosiloxane (P₁) ayant par molécule au moins un motif de formule : 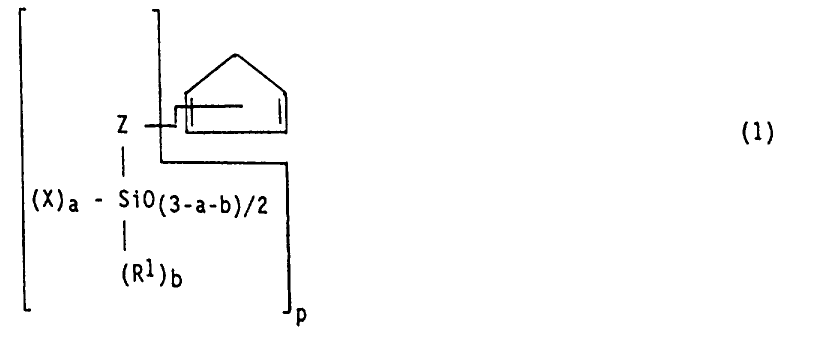 et/ou un polysiloxane (P₂) ayant par molécule au moins un motif de formule : 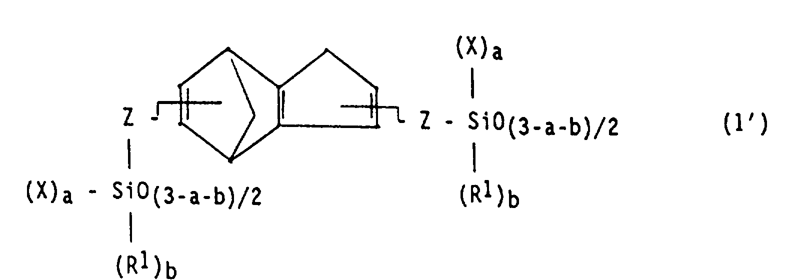 dans lesquelles :
- X, identiques ou différents, représentent des groupes hydrolysables choisis parmi un atome d'halogène et parmi les radicaux amino-N substitués, amido-N substitués, amino-N,N disubstitués, cétiminoxy, aldiminoxy, alcoxy, acyloxy, énoxy, alcoxyalkylène-oxy,
- R¹, identiques ou différents représentent des groupes hydrocarbonés monovalent ayant de 1 à 10 atomes de carbone.
- Z est un radical hydrocarboné saturé divalent, linéaire ou ramifié, ayant de 1 à 10 atomes de carbone,
- a est zéro, 1 ou 2,
- b est zéro, 1 ou 2,
- a + b est au plus égal à 2,
- p est égal à 1 ou 2,
- le polysiloxane (P1) ayant par molécule au moins un motif (1) si a est différent de zéro et au moins deux motifs (1) si a est égal à zéro.

Les radicaux R¹ mentionnés ci-avant comprennent :
- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle ;
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle ;
- les radicaux alcényles ayant de 2 à 4 atomes de carbone tels que les radicaux vinyle, allyle, butène-2 yle ;
- les radicaux aryles et halogénoaryles mononucléaires ayant de 6 à 10 atomes de carbone tels que les radicaux phénhyle, tolyle, xylyle, chlorophényle, dichlorophényle, trichlorophényle ;
- les radicaux cyanoalkyles dont les chaînons alkyles ont de 2 à 3 atomes de carbone tels que les radicaux β-cyanoéthyle et -cyanopropyle.

De préférence R¹ est choisi parmi les radicaux méthyle, phényle et vinyle, au moins 70 % en nombre des radicaux R¹ étant méthyle.

Les polysiloxanes selon la présente invention peuvent présenter en outre éventuellement d'autres motifs siloxyle répondant à la formule :

(R¹)_{c} SiO(_{(4-c)/2} (2)

dans laquelle :
- R¹ a la même signification que celle précisée ci-avant,
- c est chosi parmi zéro, 1, 2 et 3.

Les polyorganosiloxanes selon la présente invention peuvent présenter une structure linéaire, cyclique ou ramifiée et se présentent avantageusement sous forme d'huiles de viscosité comprise entre 1 et 1 000 000 mPa.s à 25 °C, de préférence comprise entre 100 et 500 000 mPa.s.

Les polyorganosiloxanes selon la présente invention comprennent par exemple :
* les copolymères diorganopolysiloxanes statistiques, séquencés ou blocs, de formule moyenne 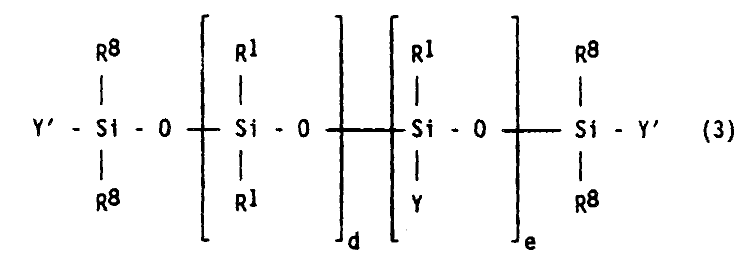 dans laquelle :
   - Y représente le groupement 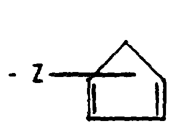 dont la signification de Z a été donnée ci-avant,
   - R¹ et X ont la même signification que celle donnée ci-avant,
   - Y′ est choisi parmi les radicaux Y, R¹ et hydroxyle,
   - R⁸ est choisi parmi un radical R¹ et un radical X,
   - d est un nombre compris entre 0 et 1 000,
   - e est un nombre entier compris entre 0 et 50
   - si e = 0, les deux radicaux Y′ sont égaux à Y
* et ceux de formule 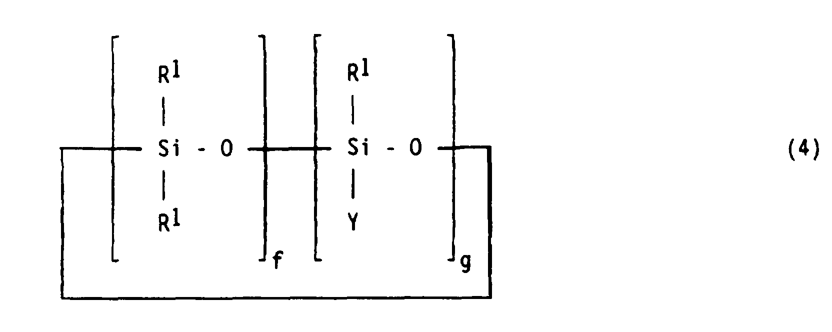 dans laquelle :
   - R¹ et Y ont la signification donnée ci-dessus,
   - f est un nombre entier compris entre 0 et 9 inclus,
   - g est un nombre entier compris entre 1 et 9 inclus,
   - f + g est compris entre 3 et 10 inclus.

Les polysiloxanes selon la présente invention comprennent de plus ceux ayant pour formule : 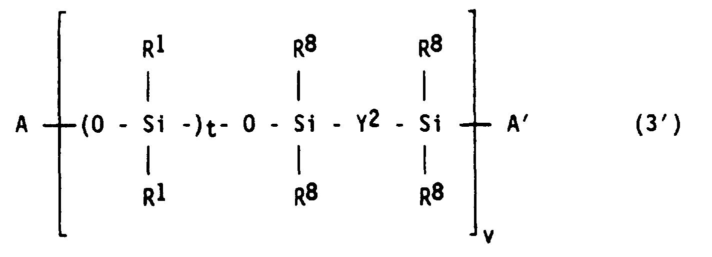 dans laquelle :
- Y représente un groupement 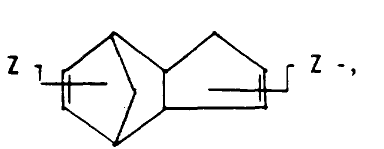 la signification de Z ayant été précisée ci-avant,
- R¹ a la signification donnée ci-avant,
- R⁸ est choisi parmi un radical R¹ et un radical X dont la signification a été donnée ci-avant,
- A est choisi parmi :
   . un atome d'hydrogène,
   . un groupement R¹₃Si-, la signification de R¹ ayant été donné ci-avant,
   . un groupement 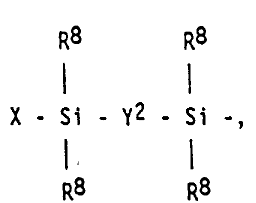 les significations de R⁸, Y₂, et X ayant été données ci-avant,
- A' est choisi parmi :
   . le radical X dont la signification a été donnée ci-avant,
   . le groupement 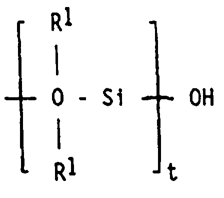 dans lequel l'atome d'hydrogène du groupement hydroxyle peut éventuellement être remplacé par un groupement R¹₃Si-,
- t est compris entre 5 et 1 000, bornes comprises,
- v est compris entre 1 et 200, bornes comprises.

Les polyorganosiloxanes selon la présente invention comprennent également par exemple ceux selon la formule (1) et ne comportant plus de groupements hydrolysables X. Comme exemples de tels polyorganosiloxanes on peut citer notamment ceux de formule : 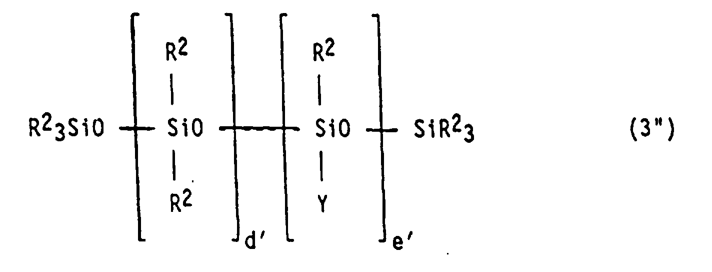 dans laquelle :
- Y représente le groupement 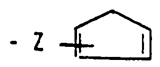 dans lequel Z est un groupement hydrocarboné ayant de 1 à 10 atomes de carbone, de préférence 3 atomes de carbone,
- R, identiques ou différents, représentent des groupes hydrocarbonés monovalents ayant de 1 à 10 atomes de carbone,
- d' est un nombre compris entre 10 et 1 000,
- e' est compris entre 2 et 50.

Les polyorganosiloxanes selon la figure (3") peuvent être préparés par exemple en faisant réagir un polyorganosiloxane de formule 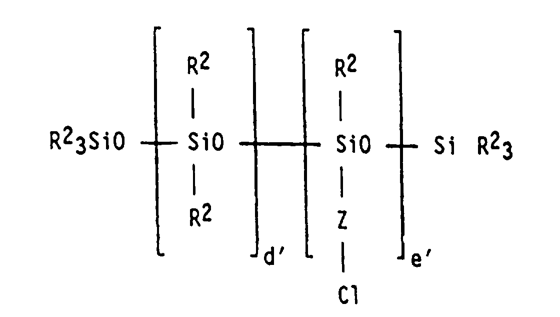 avec du sodium cyclopentadiènyle de formule 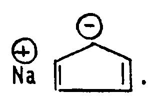 Pendant cette réaction il se forme du chlorure de sodium et le produit de formule (3"), les significations de R, d' et e' ayant été données ci-avant. Le sodium cyclopentadiényle est un produit dont la préparation est par exemple décrite dans le brevet américain 2 957 901 aux exemples I et II.

Les polyorganosiloxanes de formules (1), (1'), (3) et (4) peuvent être préparés par hydrolyse et polycondensation des silanes de formules 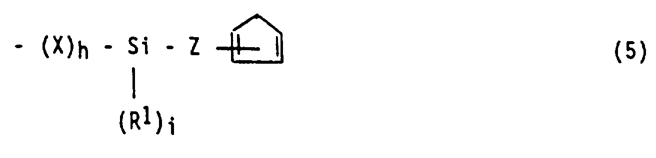 et/ou des silanes de formule

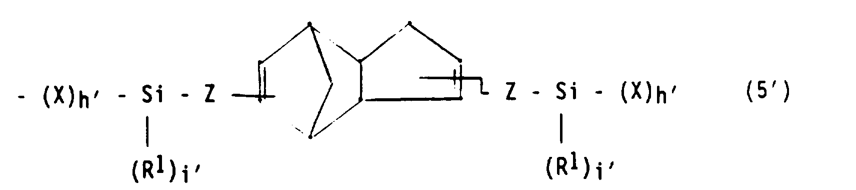

Le silane de formule (5′) étant le dimère du silane de formule (5),
- et/ou des silanes de formule 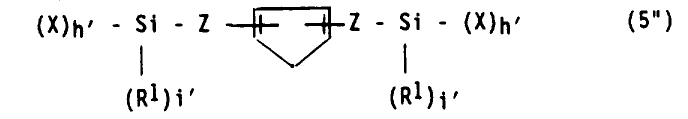
- éventuellement en présence d'un halogénosilane, de préférence un chlorosilane de formule :

   (R¹)ⱼ (Cl)ₖ Si (6)

   dans lesquelles :
- Z a la même signification que celle précédemment donnée,
- R¹ a la même signification que celle précédemment donnée,
- X a la même signification que celle précédemment donnée et représente avantageusement un groupe alcoxy, de préférence méthoxy ou éthoxy, ou un atome d'halogène, de préférence de chlore,
- h est choisi parmi 2 et 3,
- i est choisi parmi zéro et 1,
- h + i = 3,
- i′ est choisi parmi zéro, 1 ou 2,
- h′ est choisi parmi 1, 2 ou 3,
- i′ + h′ = 3,
- j est choisi parmi zéro, 1, 2 ou 3,
- k est choisi parmi 1, 2, 3 ou 4,
- j + k = 4.

L'utilisation de chlorosilanes de formule (6) permet d'incorporer dans l'organopolysiloxane de formule (1), des motifs de formule (2). La polycondensation peut être arrêtée par simple neutralisation du milieu réactionnel.

Dans le cas où l'on veut obtenir des polymères linéaires de formule (3) ou cycliques de formule (4), on hydrolyse et polycondense par exemple le dichlorosilane R¹YCl₂Si avec éventuellement le dichlorosilane de formule R₂ ¹SiCl₂.

Dans le cas où l'on arrête la polycondensation par simple neutralisation on obtient un mélange réactionnel comportant des polymères de formule (3) bloqués à chacune de leurs extrémités par un groupe hydroxyle ou par le motif R¹₂YSiO_{0,5} si l'on utilise au départ en outre le silane R¹₂YSiCl, les significations de Y et R¹ étant les mêmes que celles données ci-avant.

On peut également arrêter la polycondensation en ajoutant, en fin de réaction, un composé organosilicié susceptible de réagir avec les hydroxyles terminaux du polymère de formule (3) formé, ce composé organosilicié pouvant répondre aux formules :

R¹ ₃SiCl, R¹ ₃SiNHSiR¹ ₃ et R¹ ₃SiOSiR¹ ₃.

La durée de l'hydrolyse peut être comprise entre quelques secondes et plusieurs heures.

Après hydrolyse, la phase aqueuse est séparée de la phase siloxane par tout moyen physique approprié, généralement par décantation et extraction par un solvant organique comme l'éther isopropylique.

La phase siloxane peut être ultérieurement lavée à l'eau, puis distillée éventuellement pour séparer les polymères linéaires de formule (3) des polymères cycliques de formule (4).

Les polysiloxanes selon la présente invention peuvent en outre être préparés en faisant réagir une résine polyorganosiloxane comprenant au moins deux groupements hydroxyle et/ou une huile polydiorganosiloxane à groupements terminaux hydroxyle avec un silane de formule (5) et/ou avec un silane de formule (5′) ci-avant décrits, étant entendu que le silane de formule (5′) est le dimère du silane de formule (5), la demanderesse ayant constaté que selon les conditions notamment de température et selon la nature du produit, on pouvait en fait avoir :
- le silane de formule (5) seul,
- le silane de formule (5′) seul,
- le silane de formule (5˝) seul,
- le mélange de ces silanes de formules (5), (5′) et (5˝).

A titre d'exemples de silanes de formules (5) et (5′), on peut citer :

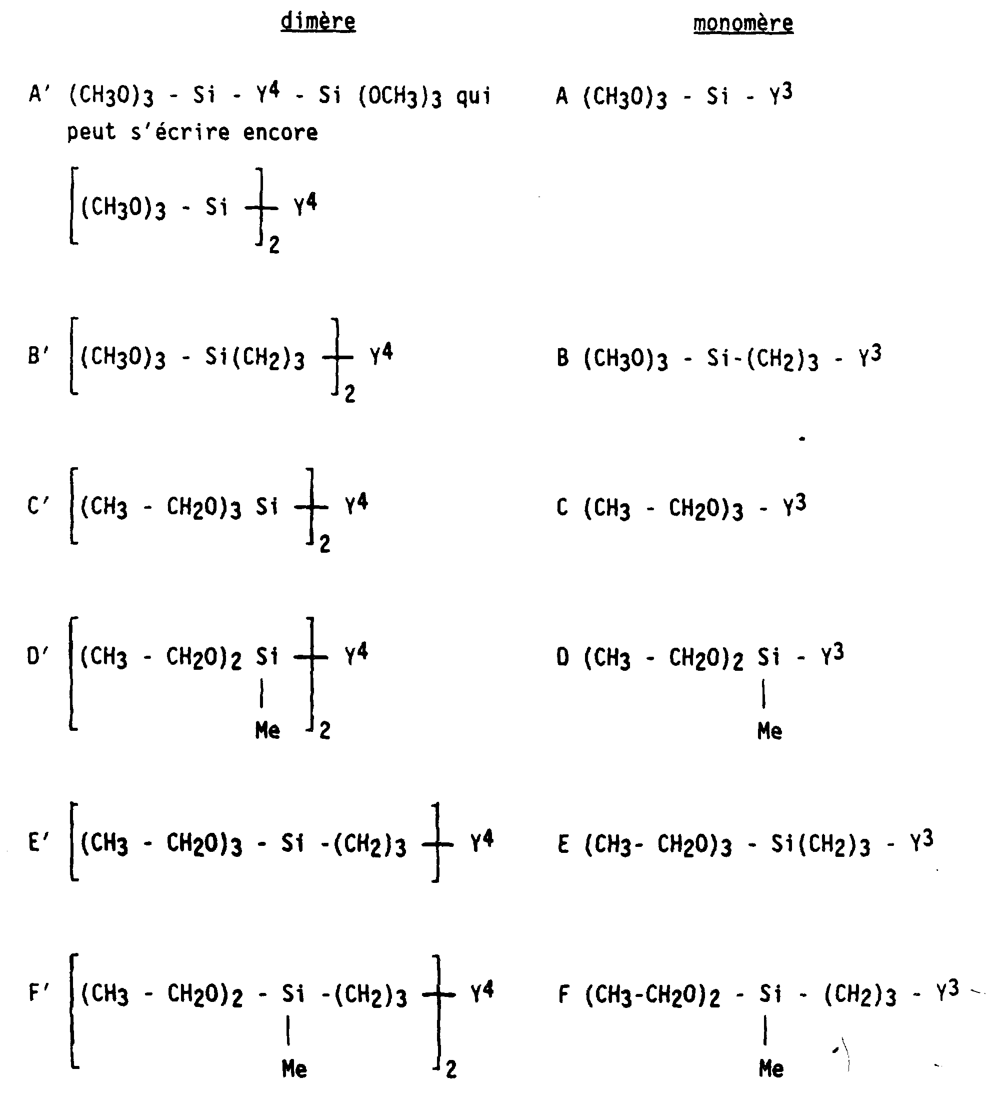

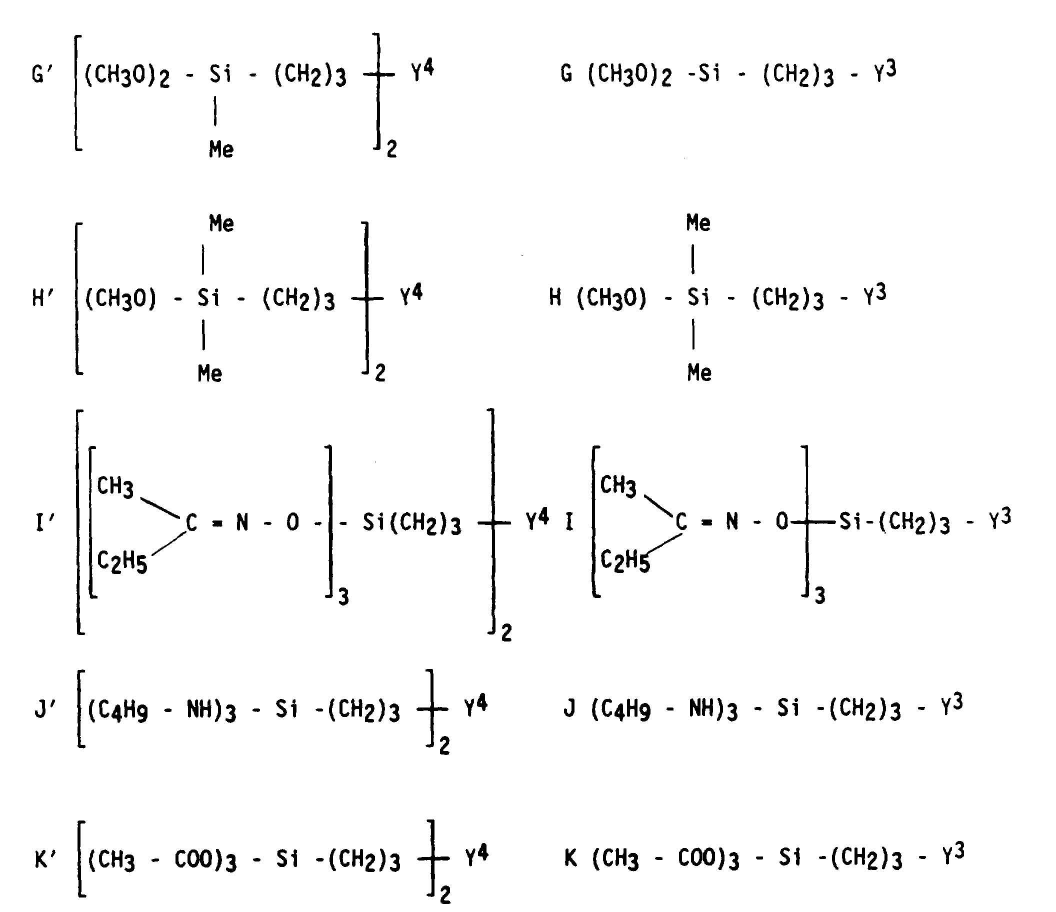

dans lesquelles :
- Me représente un groupement -CH₃ (méthyle),
- Y³ représente un groupe 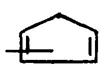 (cyclopentadiényle),
- Y⁴ représente un groupe 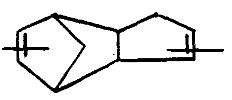 (dicyclopentadiénylène).

Les silanes de formule (5) peuvent être préparés selon l'enseignement du brevet US 4 645 850, tandis que les silanes de formule (5′) proviennent de la dimérisation partielle ou totale du silane de formule (5).

A titre d'exemples de silanes de formule (5˝) on peut citer ceux de formules :

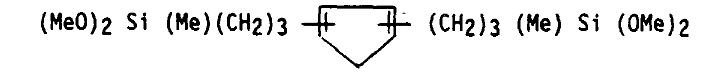

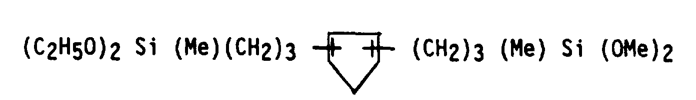

Les résines polyorganosiloxanes ayant au moins deux fonctions hydroxyle utilisées sont de préférence liquides et sont bien connues des spécialistes des silicones. Elles comportent des motifs T et/ou Q (au moins 30 % en poids) avec des motifs M et D, la signification de T, Q, D et M étant bien connue de l'homme de l'art des silicones et expliquée dans le livre de NOLL, page 3, ayant pour titre Chemistry and Technology of Silicones.

Les huiles polydiorganosiloxanes à groupements terminaux hydroxyle sont des polydiorganosiloxanes linéaires ayant pour formule 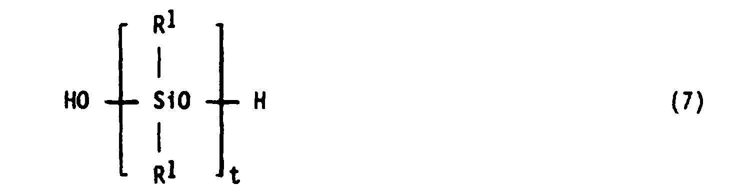 dans laquelle :
- t est compris entre 5 et 1 000, bornes comprises,
- la signification de R¹ est la même que celle précédemment donnée dans la description.

Ainsi les polysiloxanes obtenus par réaction d'un silane de formule (5') avec une huile α,ω-dihydroxypolydiorganosiloxane selon la formule (7) correspondent aux polyorganosiloxanes de formule (3') décrits ci-avant.

Les polysiloxanes obtenus par réaction d'un silane de formule (5), dans laquelle i = 1 et h = 2, avec une huile α,ω-dihydroxypolydiorganosiloxane selon la formule (7) correspondent à ceux ayant la formule 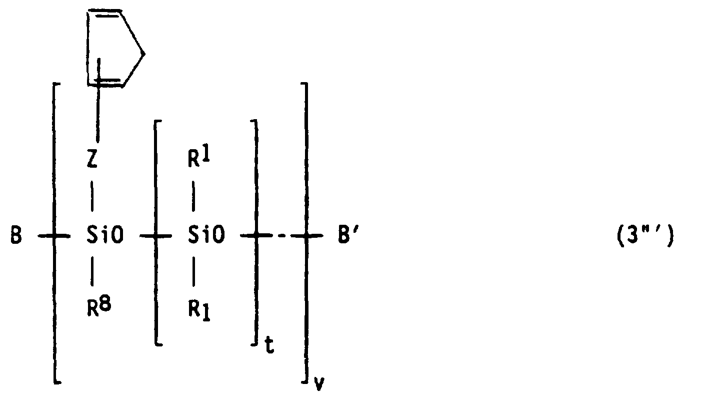 dans laquelle :
- B est choisi parmi :
   . R⁸ correspondant soit à un radical R¹
      soit à un radical X dont la signification a été déjà donnée ci-avant. 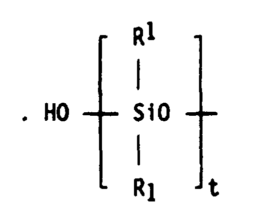
- B' est choisi parmi :
   . l'atome d'hydrogène,
   . un groupement R¹₃Si-, 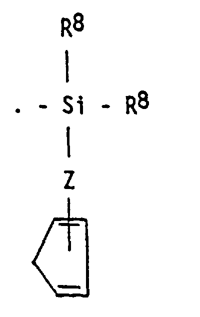
- avec t compris entre 5 et 1 000, bornes comprises,
- avec v compris entre 1 et 200, bornes comprises,
   entre 2 et 200 si B' représente un atome d'hydrogène ou un groupement R¹₃Si.

Les polysiloxanes obtenus par réaction d'un silane de formule (5") avec une huile α,ω-dihydroxypolydiorganosiloxane selon la formule (7) correspondent à ceux ayant la formule 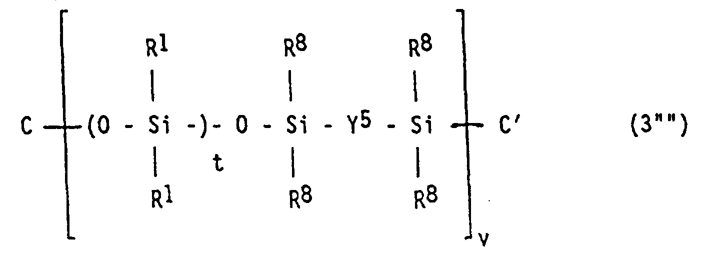 dans laquelle :
- Y⁵ représente un groupement 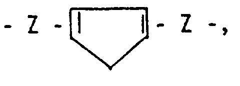 la signification de Z ayant été précisée ci-avant,
- R¹ et R⁸ ont les mêmes significations que ci-avant,
- C est choisi parmi :
   . un atome d'hydrogène,
   . un groupement R¹₃Si-,
   . un groupement 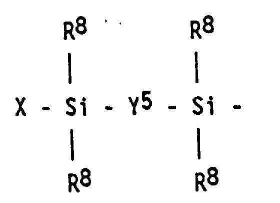
- C' est choisi parmi :
   . le radical X dont la signification a été donnée ci-avant,
   . le groupement 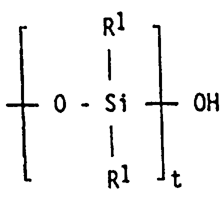 dans lequel l'atome d'hydrogène du groupement hydroxyle peut éventuellement être remplacé par un groupement R¹₃Si-,
- t est compris entre 5 et 1000, bornes comprises,
- v est compris entre 1 et 200, bornes comprises,
   entre 2 et 200 si C est choisi parmi un atome d'hydrogène ou un groupement R¹₃Si.

La présente invention concerne de plus une composition polyorganosiloxane stable au stockage en absence d'humidité et/ou de l'oxygène et réticulable en un élastomère par exposition à température ambiante (et éventuellement en chauffant) à l'humidité atmosphérique et/ou à l'oxygène de l'air.

Une telle composition est caractérisée en ce qu'elle comprend :
1. - 100 parties d'au moins un polydiorganosiloxane choisi parmi les espèces mentionnées ci-avant :
   - comprenant au moins un motif siloxyle de formules (1), (1') ou (2),
   - ou représentées par la formule moyenne (3), (3'), (3"), (3"'), (3"") ou
2. - une quantité catalytiquement efficace d'un catalyseur métallique de durcissement,
3. - 0 à 250 parties d'au moins une charge minérale.

Comme catalyseur (2) de durcissement on peut utiliser en particulier les sels d'acide monocarboxylique de métaux tels que le baryum, le bismuth, le calcium, le cérium, le cobalt, le chrome, le cuivre, le fer, le plomb, le magnésium, le manganèse, le nickel, les terres rares, l'étain, le zinc et le zirconium. D'autres ligands organiques peuvent être liés aux métaux tels que les ligands chélatés (acétylacétonate) et carbonyle. Les catalyseurs recommandés sont les sels d'acides monocarboxyliques de cobalt, de fer, de manganèse notamment l'éthyl-2 hexanoate de cobalt et plus particulièrement le dilaurate ou diacétylacétonate de dibutylétain.

Par l'expression "quantité catalytiquement efficace de catalyseur" (2) on entend une quantité suffisante pour assurer une réticulation convenable. Des quantités de 0,01 à 5 parties, de préférence de 0,1 à 3 parties en poids de sel métallique pour 100 parties de polysiloxane (1), conviennent généralement bien.

La composition peut comporter en outre un agent sèchant choisi par exemple parmi les oxydes de métaux alcalins et alcalino-terreux.

On recommande d'ajouter 0,1 à 5 parties d'agents sèchants pour 100 parties de polysiloxane (1).

On recommande également d'ajouter, en vue de diminuer le temps de prise, un agent redox du type oxyde de fer, sulfate de cuivre, etc ... par exemple à la dose de 0,1 à 3 parties pour 100 parties d'huile (1).

Les charges minérales (3) sont utilisées à raison de 0 à 250 parties, de préférence 20 à 200 parties, pour 100 parties de polymère (1).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 m/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre, leur surface spécifique est généralement inférieure à 30 m/g.

Les charges (3) peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français FR-A-1 126 884, FR-A-1 136 885, FR-A-1 236 505 ; brevet anglais GB-A-1 247 234). Les charges traitées renferment, dans la plupart des cas, de 3 à 30 % de leur poids de composés organosiliciques.

Les charges (3) peuvent être constituées d'un mélange de plusieurs types de charges de granulométrie différente ; ainsi par exemple, elles peuvent être constituées de 5 à 95 % de silices finement divisées de surface spécifique BET supérieure à 40 m/g et de 95 à 5 % de silices plus grossièrement divisées, de surface spécifique inférieure à 30 m/g ou de carbonate de calcium traité ou non traité.

Selon une variante avantageuse, on peut incorporer en outre à la composition élastomère une huile diorganopolysiloxane (4) non réactive dans la composition de formule : 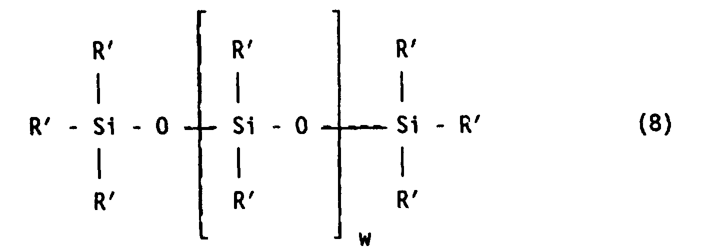 dans laquelle :
- R′ est choisi parmi les radicaux alkyles, linéaires ou ramifiés, ayant de 1 à 12 atomes de carbone et un radical phényle éventuellement substitué par un ou plusieurs radicaux alkyles inférieurs ; de préférence, R′ est méthyle et/ou phényle,
- w est un nombre entier ou fractionnaire choisi de telle sorte que le polymère de formule (8) présente une viscosité à 25 °C inférieure à 100 000 mPa.s, de préférence allant de 50 à 10 000 mPa.s.

Quand on utilise une huile (4) de formule (IX), la quantité mis en oeuvre représente 1 à 30 parties d'huile pour 100 parties de polymère (1).

Selon une autre variante avantageuse, peut être ajouté un agent d'adhérence (5) à raison de 0 à 20 parties, de préférence 0,2 à 10 parties, pour 100 parties de polysiloxane (1).

Cet agent est choisi parmi les composés organosiliciques portant à la fois d'une part des groupes organiques substitués par des radicaux choisis dans le groupe des radicaux amino, uréido, isocyanato, époxy, alkényle, isocyanurate, hydantoïle, mercaptoester et d'autre part des groupes hydrolysables liés aux atomes de silicium. A titre illustratif peuvent être cités les composés organosiliciques répondant aux formules suivantes :

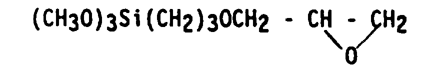

NH₂CH₂CH₂NHCH₂CH(CH₃)COO(CH₂)₃Si(OCH₃)₃

(C₂H₅O)₃Si(CH₂)₃NH₂

(CH₃O)₃Si(CH₂)₃NHCH₂CH₂NH₂

Les compositions selon l'invention peuvent contenir en outre les adjuvants ou additifs usuels, utilisés habituellement dans les compositions élastomères silicones, bien connues de l'homme de métier.

Parmi ces adjuvants on peut en particulier citer les plastifiants organiques. Les plastifiants décrits dans le brevet américain US-A-4 525 565 sont en particulier utilisables.

Parmi les autres adjuvants ou additifs on peut en particulier citer les pigments de coloration, les stabilisants thermiques, les antioxydants, les agents de fluidisation, les agents thixotropants, les antioxydants, les stabilisants thermiques, les parfums, etc .....

Les compositions selon la présente invention peuvent durcir uniquement sous l'action de l'oxygène de l'air si les polyorganosiloxanes (1) utilisés ne comportent pas de groupes hydrolysables X, ou peuvent durcir sous l'action de l'humidité atmosphérique et/ou de l'oxygène de l'air s'ils contiennent des groupements hydrolysables X.

Pour fabriquer les compositions conformes à l'invention, il est nécessaire d'utiliser un appareillage qui permette de mélanger intimement à l'abri de l'humidité et/ou de l'oxygène gazeux et de préférence sans apport de chaleur, les divers constitutants fondamentaux auxquels sont éventuellement ajoutés les adjuvants et additifs précités.

Un procédé plus particulièrement recommandé est celui qui consiste à introduire dans un mélangeur, à température ambiante, à l'abri de l'humidité et/ou de l'oxygène de l'air, les ingrédients dans l'ordre suivant : l'huile (1), éventuellement l'huile (4), éventuellement le plastifiant, le catalyseur (2), puis éventuellement l'agent séchant et enfin la charge (3) avec éventuellement l'agent d'adhérence (5).

On effectue ensuite de préférence un dégazage sous une pression réduite comprise par exemple entre 0,01 et 10 KPa.

Les compositions selon l'invention sont stables au stockage, en absence d'humidité et/ou d'oxygène gazeux, pendant au moins 6 mois et même un an, et sont plus particulièrement utilisables pour le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les compositions selon l'invention peuvent être éventuellement utilisées après dilution dans des composés organiques liquides, les diluants sont de préférence des produits usuels commercialisés, choisis parmi :
- les hydrocarbures aliphatiques, cycloaliphatiques, aromatiques, halogénés ou non, tels que le cyclohexane et le toluène
- les cétones aliphatiques et cycloaliphatiques, telle que la méthyléthylcétone,
- les esters tel que l'acétate d'éthyle.

La quantité de diluant demeure en général peu importante, elle est en général inférieure à 50 % en poids par rapport au poids total de la composition.

Les dilutions précitées de ces compositions dans des diluants organiques sont plus spécialement utilisables pour l'imprégnation en couches minces d'articles tissés ou non-tissés, l'enduction de feuilles en métal ou en matière plastique ou cellulosique ; toutefois elles peuvent être projetées, par exemple par pulvérisation à l'aide d'un pistolet à peintures, sur n'importe quels substrats, pour lesquels il est nécessaire d'obtenir un revêtement d'épaisseur de l'ordre de 5 à 300 µm. Après la projection des dilutions, les diluants s'évaporent et les compositions libérées durcissent en un film caoutchouteux parfaitement uniforme.

Par ailleurs, ce film d'élastomère peut servir comme revêtement antiadhérent inerte, non toxique, de divers substrats en contact avec des produits alimentaires tels que (i) des papiers d'emballage pour confiserie, ou viandes congelées, (2i) des bacs métalliques utilisables pour la préparation de glaces et sorbets et (3i) des filets métalliques dans lesquels on dépose et moule la pâte à pain et que l'on introduit avec leur contenu dans les fours pour la cuisson du pain. Il peut être employé également, comme revêtement antiadhérent et non toxique de matériaux en contact avec le corps humain tels que compresses, pansements spéciaux pou brûlures.

A noter que les compositions selon l'invention sont susceptibles de réticuler en élastomère soit par exposition de la composition silicone à la chaleur, soit par exposition de la composition au rayonnement ultra-violet.

Dans ce qui suit ou ce qui précède, sauf mentions expresses contraires, les parties et pourcentages sont en poids.

Les exemples suivants illustrent l'invention.

Dans les formules de ces exemples Me symbolise un radical méthyle.

Les propriétés mécaniques des compositions élastomères conservées dans un tube en aluminium étanche à l'humidité atmosphérique et à l'oxygène de l'air sont évaluées de la façon suivante :
- on étale le contenu d'un tube sous forme d'une couche mince, à l'air libre, sur une plaque support,
- on mesure le temps (tp) de formation de peau à la surface du film et le temps de démoulage (td) nécessaire pour pouvoir retirer l'élastomère de la plaque.

La couche déposée se transforme en un film caoutchouteux ; on enlève le film d'élastomère dès qu'il est démoulable et mesure, après vieillissement de x jours à la température ambiante, les propriétés dynamométriques des élastomères, à savoir :

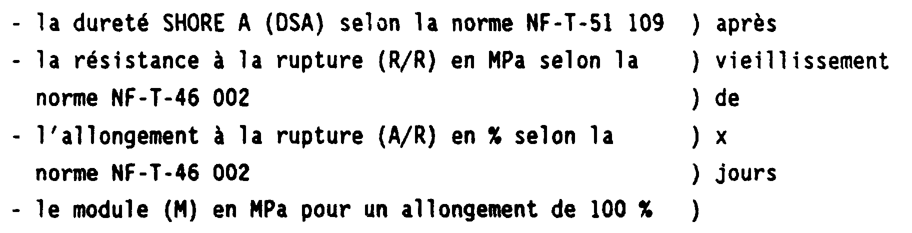

### - EXEMPLE 1 :

Dans un réacteur à fond plat de capacité 500 cm³ muni d'un agitateur tripales et d'un système de chauffage et de refroidissement on introduit :
- 300 g d'une huile polydiméthylsiloxane (PDMS) α,ω-dihydroxylée de formule moyenne : 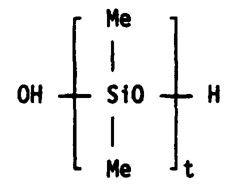 dont la masse moléculaire en nombre est de 38 500,
   dont la viscosité est de 20 000 mPa.s à 25 °C,
   où t est ≃ 519,
   ce qui correspond à 15,6 mmoles de OH,
- et 14,55 g de dimère de γ-cyclopentadiènylpropyl-triéthoxysilane, soit 26,9 mmoles du produit E′ précédemment décrit, ce produit étant commercialisé par la Société DEGUSSA, référence (Si 260).

Le mélange est agité pendant une heure à 25 °C sous atmosphère inerte d'azote. La viscosité de l'huile est alors de 18 950 mPa.s à 25 °C. Un dosage des silanols restants montre qu'il n'y a eu aucune disparition de ces derniers. Il n'y a donc pas eu fonctionnalisation.

### - EXEMPLE 2 :

On procède de la même façon que pour l'exemple 1 excepté que l'on chauffe le mélange huile/silane sous azote à 80 °C avant de démarrer la réaction de fonctionnalisation par introduction de 1,44 g de solution méthanolique de lithine contenant 2,85 mmoles de LiOH faisant office de catalyseur. On chauffe encore une heure à 80 °C puis on coule une solution neutralisante d'acide phosphorique et on laisse encore 10 minutes à 80 °C. On refroidit ensuite à 20 °C et on récupère une huile fonctionnalisée ne comportant plus de silanols dont la viscosité est de 70 000 mPas.

L'huile obtenue a pour formule 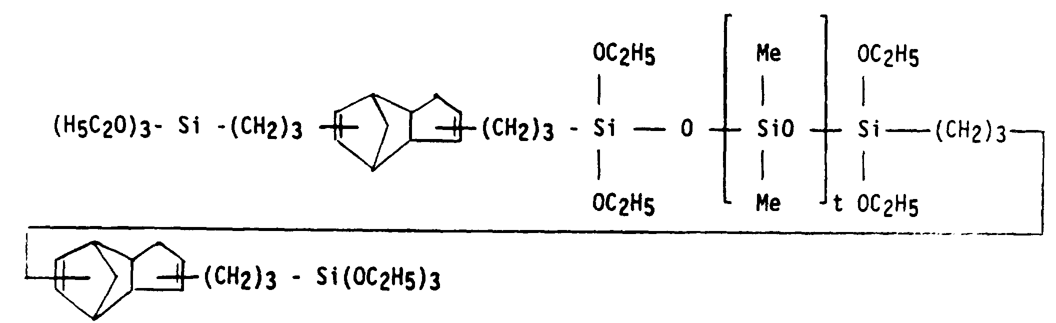 et correspond à un polysiloxane selon la présente invention, de formule générale (3′).

### - EXEMPLES 3, 4 et 5 :

Des compositions élastomères sont réalisées à partir de l'huile obtenue à l'exemple 2 et ces compositions réticulent à l'humidité atmosphérique et à l'oxygène de l'air.

Ces compositions sont obtenues en mélangeant dans le réacteur à fond plat décrit précédemment successivement à 25 °C sous agitation et atmosphère inerte d'azote :
- 100 parts d'huile fonctionnalisée,
- 10 parts d'huile PDMS α,ω-triméthylsilyle de viscosité 100 mPa.s,
- 0,1 part de catalyseur de réticulation,
- n* parts d'un silane aminé de formule :

   (C₂H₅O)₃-Si-(CH₂)₂- NH-(CH₂)₂-NH₂,

   en tant que promoteur d'adhérence,
- 8 parts de silice de combustion de surface spécifique de 150 m/g.

Les compositions obtenues sont stockées en cartouche étanche à l'humidité et à l'oxygène de l'air pendant 48 heures ou 3 mois avant d'être extrudées puis étalées pour former des films élastomère dont on mesure les propriétés dynamométriques au cours de la réticulation. L'épaisseur des films est de 2 mm.

| | EXEMPLE 3 | | EXEMPLE 4 | | EXEMPLE 5 | |
|---|---|---|---|---|---|---|
| STOCKAGE | 48 H | 3 mois | 48 H | 3 mois | 48 H | 3 mois |
| CATALYSEUR | Sn/Co | Sn/Co | Sn | Sn | Co | Co |
| SILANE AMINE (parts) | 3,3 | 3,3 | 0 | 0 | 0 | 0 |

| ASPECT | SAUMON | | IVOIRE | | SAUMON | |
|---|---|---|---|---|---|---|
| tfp (mn) | 30 | 30 | 5 | 37 | 5 | |
| DEMOULAGE (heures) | 24 | 24 | 24 | 24 | non réticulé 7 jours | |
| DURETE SHORE A | | | | | | |
| 2 jours | 6 | 7 | 8 | 13 | 0 | |
| 7 jours | 11 | 14 | 15 | 18 | 0 | |
| RESISTANCE (MPa) rupture | 0,8 | 0,8 | 0,8 | 0,9 | 0 | |
| ALLONGEMENT (%) rupture | 240 | 216 | 205 | 213 | 0 | |
| MODULE A 100 % | 0,3 | 0,4 | 0,5 | 0,6 | 0 | |
| SILANE AMINE = (C₂H₅O)₃Si-(CH₂)₃-NH-(CH₂)₂-NH₂ Sn = Bisacétylacétonate de dibutylétain Co = Octoate de cobalt à 6 % de cobalt 1 part tpf = temps de formation de peau | | | | | | |

### - EXEMPLE 6 : POLYMERISATION D'OLIGOMERES SILOXANES SELON US 4 508 845 :

Dans un réacteur cylindrique de diamètre 4 cm, de longueur 20 cm et donc de capacité 250 cm³ on introduit 115 g de microbilles de silice poreuses encore appelées sphérosil, greffées par du polystyrène sulfoné et possédant des sites catalytiques H⁺ (0,6 meq/g). La granulométrie des billes est de 100 à 200 microns. Le système est muni d'une enveloppe chauffante et une sonde permet de mesurer la température au coeur du réacteur.

Le réacteur est relié à une pompe d'alimentation en continu des réactifs, soit un mélange comportant : 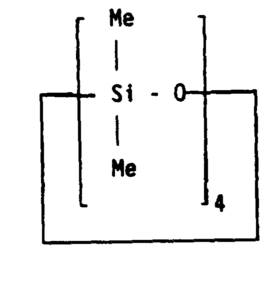 5 000 g, non séché,

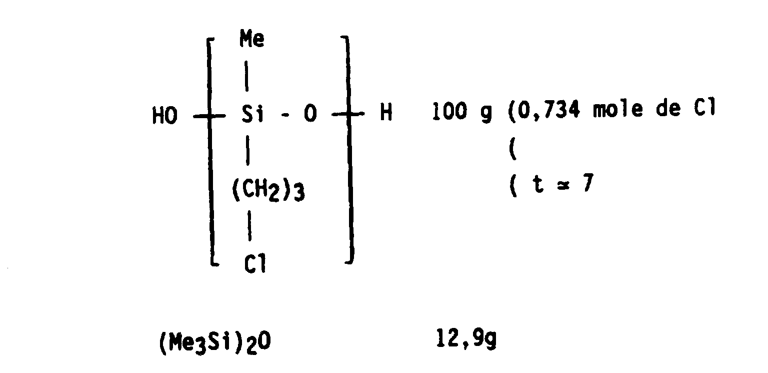

Le taux théorique de chlore est de 0,5 %.

On chauffe à 84 °C la masse et on commence à alimenter le réacteur à raison de 2 ml/mn.

Après 20 minutes de mise en régime la pression relative est de 5 bars et on commence à prélever le produit de la réaction. Après 24 heures on stoppe la réaction et on dévolatilise 3 000 g de produit à 10 % de matières volatiles. L'analyse par RMN⁹Si, ¹H, par chromatographie de gel perméation et le dosage des groupements Cl présents confirme l'obtention d'une huile de formule moyenne : 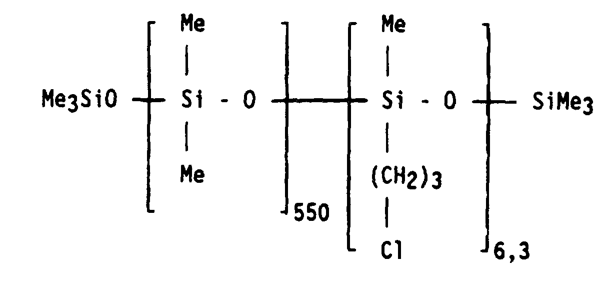 Mn = 42 000 15 meq Cl/100 g appelée (HU6) par la suite, (Mn = masse moléculaire en nombre).

### - EXEMPLE 7 :

512 parties de l'huile (HU6) de l'exemple 6 sont introduites dans un réacteur en verre de 2 litres muni d'un système d'agitation centrale et un d'un système de refroidissement ou chauffage à double enveloppe.

Sous atmosphère d'argon on coule 38,44 cc en 30 minutes d'une solution de sodium cyclopentadiényle à 2 moles/litre (76,8 meq de l'anion cyclopentadiényle) dans du tétrahydrofuranne à une température inférieure à 30 °C. Après 24 heures d'agitation à température ambiante et sous argon on élimine le sel formé par filtration de l'huile sur une plaque cellulose (filtre EUROFILTEC).

On récupère 300 parties d'huile qui est ensuite débarassée du tétrahydrofuranne résiduel.

L'analyse par RMN ¹H du produit de réaction montre que l'on obtient une huile de formule moyenne : 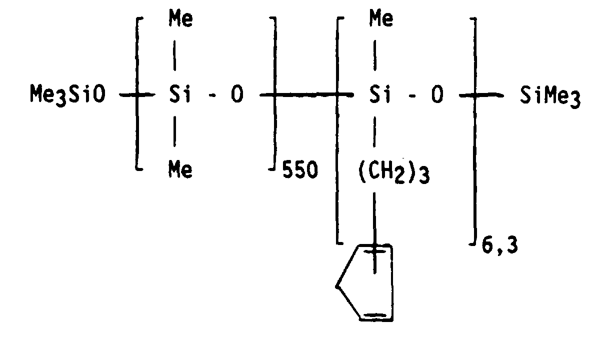 Mn ≃ 45 000

L'huile est stockée à l'abri de l'air et est appelée (HU 7) par la suite.

### - EXEMPLE 8 : Préparation de

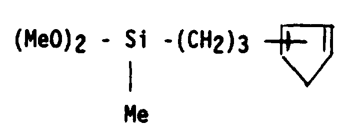

### Selon US 4 704 428 et US 4 645 850

Dans un ballon de 2 litres muni d'une agitation mécanique et d'un réfrigérant ascendant on introduit sous azote 292 g de γ-chloropropylméthyldiméthoxysilane. On coule à 0 °C, en maintenant à cette température, 800 ml d'une solution d'anion cyclopentadiényle du sodium NaCp à 2 mole/litre dans du tétrahydrofuranne. Après 1 heure la coulée est terminée. On maintient pendant 2 heures à 5 °C. Après 2 heures de réaction on atteint un taux de transformation du γ-chloropropylméthyldiméthoxysilane de 80 % (chromatographie en phase vapeur). On laisse revenir à température ambiante, et le taux de transformation du γ-chloropropylméthyldlméthoxysilane est supérieur à 98 % après 10 heures de réaction. On filtre sous argon pour éliminer le chlorure de sodium formé, et on évapore le tétrahydrofuranne à 20 °C sous pression absolue de 1 mm Hg (masse obtenue : 325 g).

Le produit attendu représente 75 % du brut réactionnel.

Environ 20 % du brut réactionnel a pour formule :

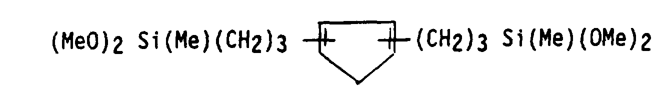

La RMN¹H du produit attendu indique 2 isomères présents.

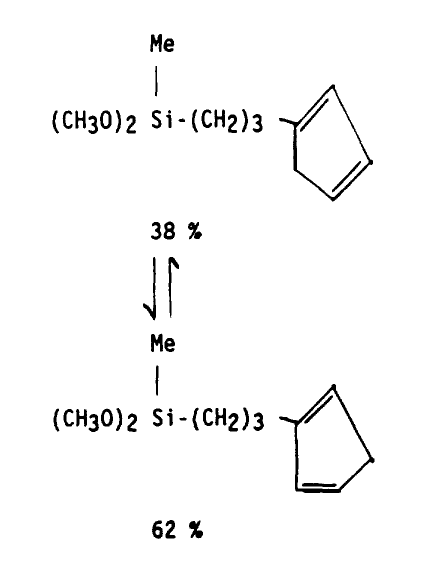

La distillation du brut réactionnel à 60 °C sous 0,7 mm Hg (pression absolue) conduit à l'obtention de 180 g d'un produit jaune pale.

L'analyse RMN¹H montre que l'on obtient un mélange constitué de :

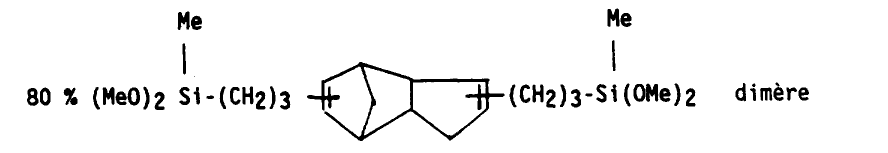

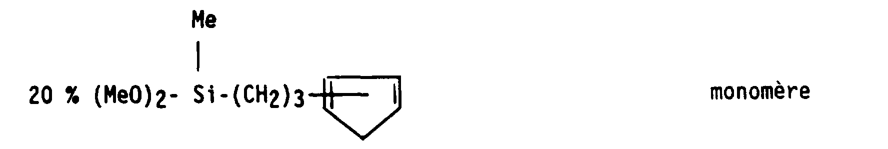

Si on piège le distillat à basse température (θ < 0° C) on n'obtient que le produit monomère.

### - EXEMPLE 9 :

Dans un réacteur à fond plat de capacité 2 litres muni d'un agitateur tripales, d'un système de chauffage et de refroidissement, on introduit respectivement . à 25 °C sous argon :
541 g d'une huile de formule moyenne : 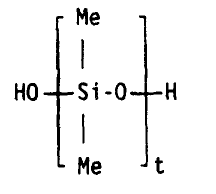 Mn ≃ 26 700, t ≃ 360
viscosité = 5 000 mPa.s à 25 °C
soit 40,5 meq OH
. à 25 °C sous argon :
   10 g de silane préparé à l'exemple 8
   soit 94 meq OMe
   On chauffe ensuite à 90 °C
. à 90 °C sous argon :
   20 g d'un empâtage formé de 90 parties d'une huile α,ω-dihydroxypolydiméthylsiloxane de viscosité 10 000 mPa.s à 25 °C,
   5 parties d'une silice de combustion de surface spécifique 150 m/g et
   5 parties d'eau (soit 55 meq H₂O)
. à 90 °C :
   0,5 g d'un catalyseur à base d'étain de formule

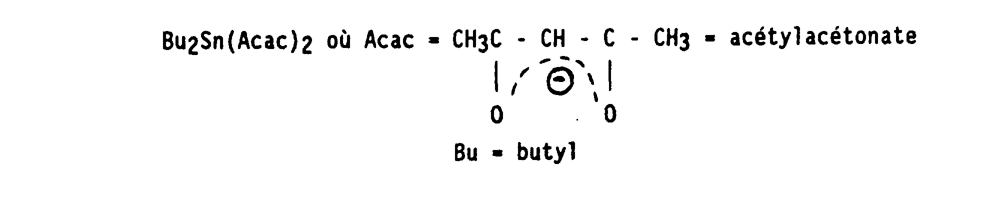

On laisse sous agitation pendant 2 heures 15 minutes sous argon à 90 °C puis on élimine le méthanol formé sous pression absolue de 1 mm Hg à 90 °C. La viscosité de l'huile obtenue à 25 °C est de 12 000 mPa.s et le poids moléculaire moyen de l'huile est d'environ 40 000. Cette huile sera appelée HU9 par la suite.

### - EXEMPLE 10 :

A 100 parties d'huiles HU7 et 9 sont ajoutés 1 partie d'octoate de cobalt et 1 partie d'octoate de zirconium ainsi que 8 parties de silice de combustion 150 m/g. Les mélanges sont réalisés à l'abri de l'air.

Les temps de formation de peau, lors de la réticulation à l'air sont de quelques heures et les élastomères obtenus sont démoulables après 72 heures de réticulation.
DSA 7 jours HU7 = 6
DSA 7 jours HU9 = 10.

### - EXEMPLE 11 :

Dans le même réacteur que celui décrit à l'exemple 9, on introduit respectivement à 200 °C sous argon :
- 734 g d'une huile de formule moyenne 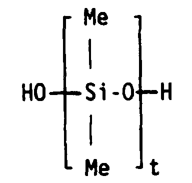 Mn ≃ 38 500
   t = 520
   n = 20 000 mPa.s à 25 °C
   soit 38 meq OH
- 14,7 g d'un silane préparé à l'exemple 8 : soit 138 meq OMe On chauffe ensuite à 90 °C sous argon.
- 20 g d'un empâtage formé de 90 parties d'une huile α,ω-dihydroxypolydiméthylsiloxane de viscosité 10 000 mPa.s à 25 °C, 5 parties d'une silice de combustion de surface spécifique 150 m/g et 5 parties d'eau (soit 55 meq H₂O).
- 0,5 g à 90 °C d'un catalyseur à base d'étain de formule 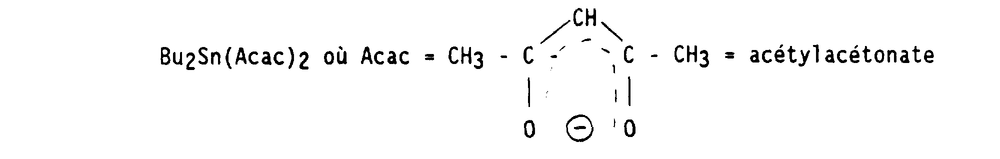 Bu = butyle

On laisse sous agitation pendant 1 heure à 90 °C puis on élimine le méthanol formé sous pression absolue de 1 mmHg à 90 °C pendant 2 heures.

La viscosité de l'huile obtenue à 25 °C est de 35 000 mPa.s (HUII).

### - EXEMPLES 12, 13 :

Des compositions élastomères sont réalisées à partir de l'huile (HUII).

Ces compositions réticulent à l'humidité atmosphérique et à l'oxygène de l'air.

Ces compositions sont obtenues en mélangeant, en poids, dans un réacteur à fond plat de capacité 2 litres sous agitation et atmosphère inerte :
- 100 parts d'huile (HUII),
- x parts de silane tel que décrit à l'exemple 8,
- y parts d'octoate de cobalt à 10 %,
- z parts d'octoate de zirconium à 18 %,
- n parts de diacétylacétonate de dibutylétain,
- 100 parts de carbonate de calcium CaCO₃,
- 9 parts de silice de combustion de surface spécifique de 150 m/g.

Les compositions obtenues sont stockées en cartouche étanche à l'humidité et à l'oxygène de l'air pendant 48 heures avant d'être extrudées puis étalées pour former des films élastomère dont on mesure les propriétés dynamométriques au cours de la réticulation.

L'épaisseur des films est de 2 mm.

| | EXEMPLE 12 | EXEMPLE 13 |
|---|---|---|
| STOCKAGE | 48 heures | 48 heures |
| x | 0 | 3,8 |
| y | 0,59 | 0,23 |
| z | 0,5 | 0,24 |
| n | 0 | 0,12 |
| Aspect | Ivoire | Ivoire |
| tfp (mn) | 10 | 5 |
| Démoulage (jours) | > 7 jours | 4 |
| Dureté Shore A | | |
| 7 jours | - | 5 |
| 14 jours | - | 20 |
| R. Rupture (Mpa) | | |
| 7 jours | - | 0,6 |
| Allongement rupture (%) | | |
| 7 jours | - | 220 |
| Module à 100% | - | 0,4 |

## Revendications

1. Polymère polyorganosiloxane, caractérisé en ce qu'il comprend un polysiloxane (P₁) ayant par molécule au moins un motif de formule 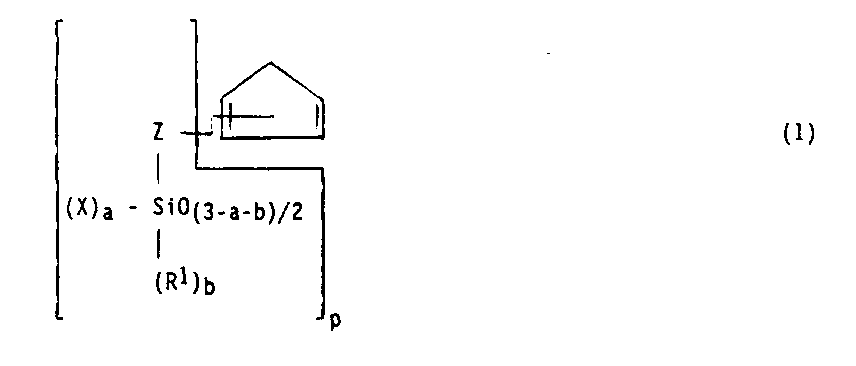 et/ou un polysiloxane (P₂) ayant par molécule au moins un motif de formule 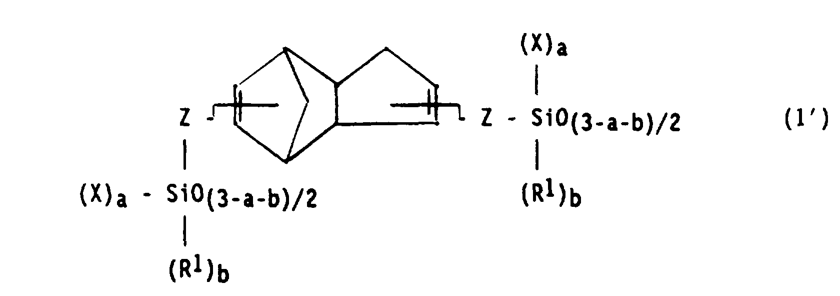 dans lesquelles :
- X, identiques ou différents, représentent des groupes hydrolysables choisis parmi un atome d'halogène et parmi les radicaux amino-N substitués, amido-N subsitués, amino-N,N disubstitués, cétiminoxy, aldiminoxy, alcoxy, acyloxy, énoxy, alcoxyalkylène-oxy,
- R¹, identiques ou différents représentent des groupes hydrocarbonés monovalents ayant de 1 à 10 atomes de carbone, éventuellement substitués par des atomes d'halogène ou des groupes cyano,
- Z est un radical hydrocarboné saturé divalent, linéaire ou ramifié, ayant de 1 à 10 atomes de carbone,
- a est zéro, 1 ou 2,
- b est zéro, 1 ou 2,
- a + b est au plus égal à 2,
- p est égal à 1 ou 2,
- le polyxiloxane (P₁) ayant par molécule au moins un motif (1) si a est différent de zéro et au moins deux motifs (1) si a est égal à zéro.

2. Polymère polyorganosiloxane selon la revendication 1, caractérisé en ce que le polysiloxane de formule (1) et/ou (1') comprend de plus d'autres motifs siloxyle répondant à la formule :
(R¹)_{c} SiO_{(4-c)/2} (2)
dans laquelle :
- R¹ a la même signification que celle précisée ci-avant,
- c est choisi parmi zéro, 1, 2 et 3.

3. Polyorganosiloxane selon l'une quelconque des revendications précédentes, caractérisé en ce qu'il est choisi parmi les copolymères diorganopolysiloxanes statistiques, séquencés ou blocs, de formule moyenne : 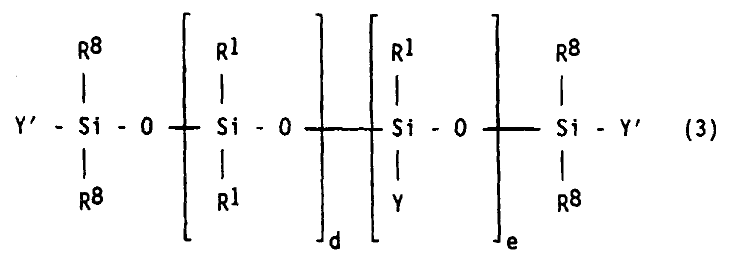 dans laquelle :
- Y représente le groupement 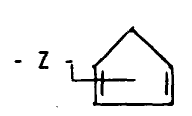 dont la signification de Z a été donnée ci-avant,
- R¹ et X ont la même signification que celle donnée ci-avant
- Y′ est choisi parmi les radicaux Y, R¹ et hydroxyle,
- R⁸ est choisi parmi un radical R¹ et un radical X,
- d est un nombre compris entre 0 et 1 000,
- e est un nombre entier compris entre 0 et 50
- si e = 0, les deux radicaux Y′ sont égaux à Y et parmi ceux de formule 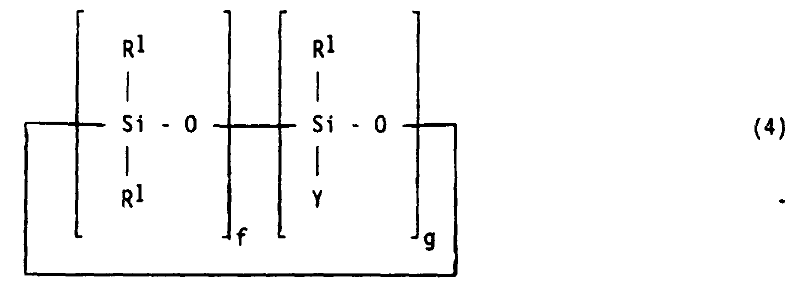 dans laquelle :
- R¹ et Y ont la signification donnée ci-dessus,
- f est un nombre entier compris entre 0 et 9 inclus
- g est un nombre entier compris entre 1 et 9 inclus
- f + g est compris entre 3 et 10 inclus.

4. Polymère polyorganosiloxane selon l'une quelconque des revendications 1 ou 2, caractérisé en ce qu'il est choisi parmi :
. les polysiloxanes ayant pour formule : 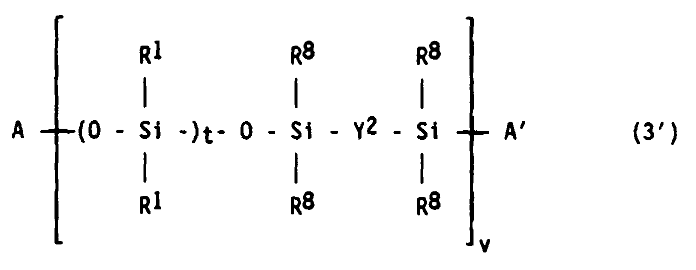 dans laquelle :
- Y représente un groupement 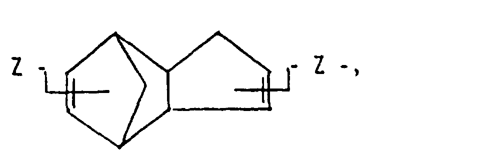 la signification de Z ayant été précisée ci-avant,
- R¹ a la signification donnée ci-avant,
- R⁸ est choisi parmi un radical R¹ et un radical X dont la signification a été donnée ci-avant,
- A est choisi parmi :
. un atome d'hydrogène,
. un groupement R¹₃Si-, la signification de R¹ ayant été donné ci-avant,
. un groupement 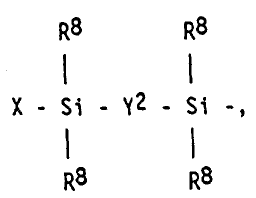 les significations de R⁸, Y et X ayant été données ci-avant,
- A' est choisi parmi :
. le radical X dont la signification a été donnée ci-avant,
. le groupement 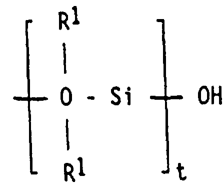 dans lequel l'atome d'ydrogène du groupement hydroxyle peut éventuellement être remplacé par un groupement R¹₃Si-,
- t est compris entre 5 et 1 000, bornes comprises,
- v est compris entre 1 et 200, bornes comprises,
entre 2 et 200 si A est chosi parmi un atome d'hydrogène ou un groupement R¹₃Si.
. et/ou les polysiloxanes ayant pour formule 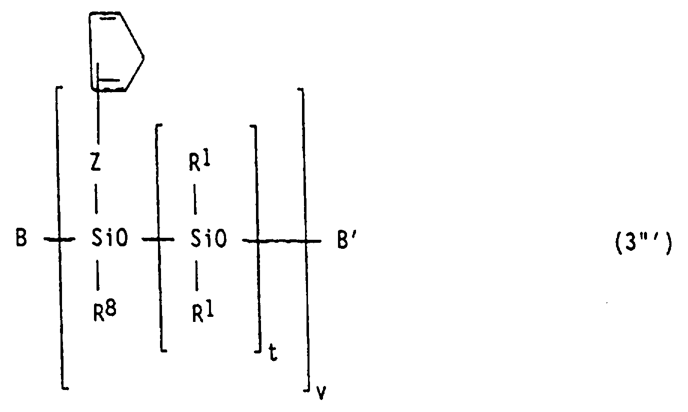 dans laquelle :
- Z a la même signification que ci-avant,
- B est choisi parmi :
. R⁸ précédemment défini, 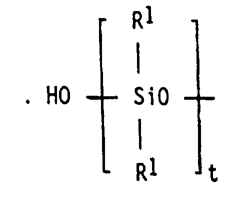
- B' est choisi parmi :
. l'atome d'hydrogène,
. un groupement R¹₃Si-, 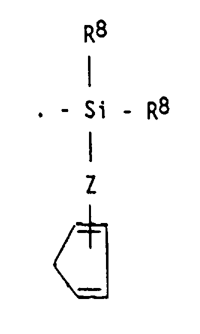
- t est compris entre 5 et 1 000, bornes comprises,
- v est compris entre 1 et 200, bornes comprises,
v étant compris entre 2 et 200 si B' représente un atome d'hydrogène ou un groupement R¹₃Si.
. et/ou les polysiloxanes ayant pour formule 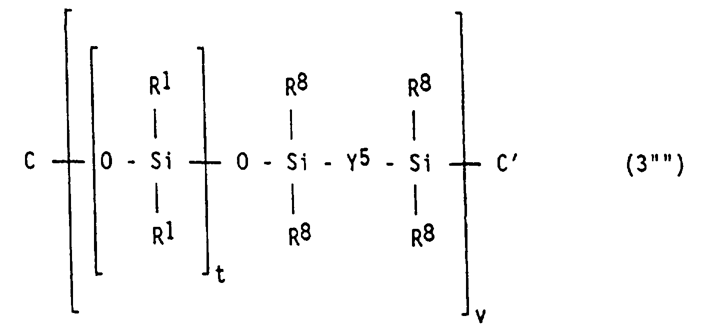 dans laquelle :
- Y⁵ représente un groupement 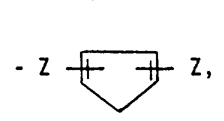 la signification de Z ayant été précisée ci-avant,
- R¹ et R⁸ ont les mêmes significations que ci-avant,
- C est choisi parmi :
. un atome d'hydrogène,
. un groupement R¹₃Si-,
. un groupement 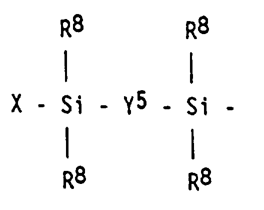
- C' est choisi parmi :
. le radical X dont la signification a été donnée ci-avant,
. le groupement 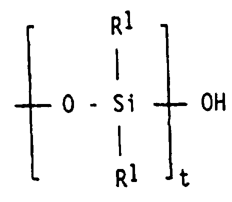 dans lequel l'atome d'hydrogène du groupement hydroxyle peut éventuellement être remplacé par un groupement R¹₃Si-,
- t est compris entre 5 et 1000, bornes comprises,
- v est compris entre 1 et 200, bornes comprises,
entre 2 et 200 si C est choisi parmi un atome d'hydrogène ou un groupement R¹₃Si.

5. Polymère polyorganosiloxane selon l'une quelconque des revendications 1 à 3, caractérisé en ce qu'il comprend un polysiloxane de formule : 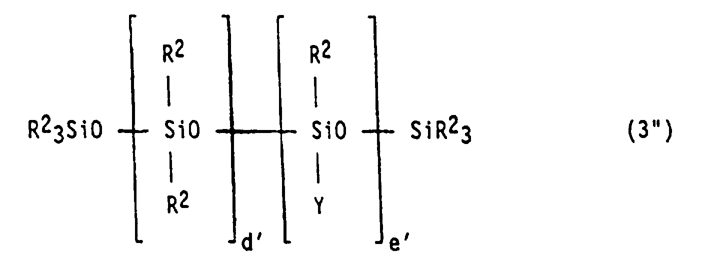 dans laquelle :
- Y représente le groupement 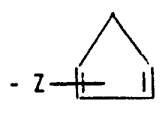 dans lequel Z est un groupement hydrocarboné ayant de 1 à 10 atomes de carbone, de préférence 3 atomes de carbone,
- R, identiques ou différents, représentent des groupes hydrocarbonés monovalents ayant de 1 à 10 atomes de carbone,
- d' est un nombre compris entre 10 et 1000,
- e' est compris entre 2 et 50.

6. Procédé de préparation du polyorganosiloxane de formule (3˝) selon la revendication 5, caractérisé en ce qu'on fait réagir un polyorganosiloxane de formule : 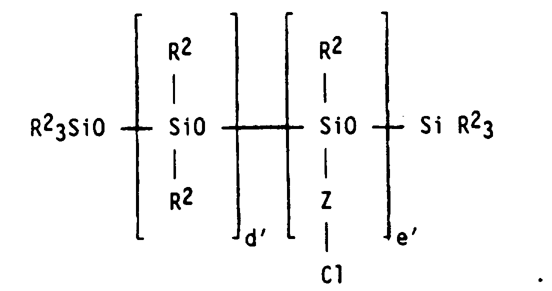 avec du sodium cyclopentadiènyle.

7. Procédé de préparation des polysiloxanes selon les revendications 1 à 3, caractérisé en ce qu'on hydrolyse et polycondense des silanes de formules : 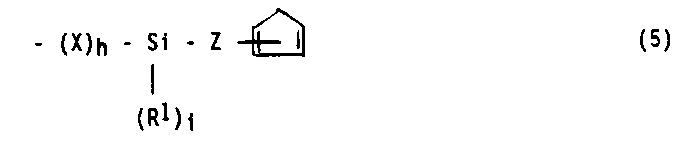 et/ou des silanes de formule : 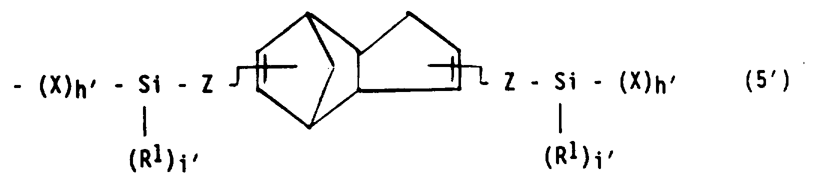
- et/ou des silane de formule : 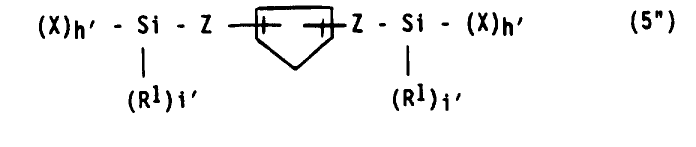
- éventuellement en présence d'un halogénosilane, de préférence un chlorosilane de formule :
(R¹)ⱼ (Cl)ₖ Si (6)
dans lesquelles :
- Z, R¹ et X ont les mêmes significations que celles précédemment données,
- h est choisi parmi 2 et 3,
- i est choisi parmi zéro et 1,
- h + i = 3,
- i′ est choisi parmi zéro, 1 ou 2,
- h′ est choisi parmi 1, 2 ou 3,
- i′ + h′ = 3,
- j est choisi parmi zéro, 1, 2 ou 3,
- k est choisi parmi 1, 2, 3 ou 4,
- j + k = 4.

8. Procédé de préparation des polymères polyorganosiloxanes selon la revendication 4, caractérisé en ce que l'on fait réagir
- un polydiorganosiloxane linéaire ayant pour formule 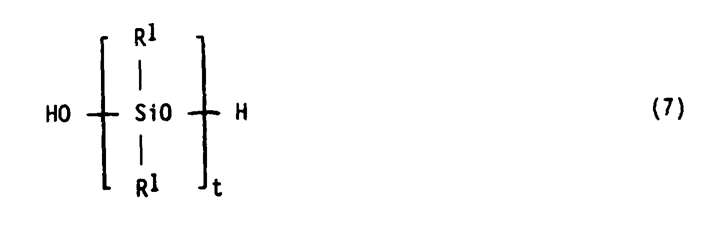
- t est compris entre 5 et 1 000, bornes comprises,
- la signification de R¹ est la même que celle précédemment donnée,
- avec au moins un silane chosi parmi ceux de formules (5), (5′) et (5˝) selon la revendication 7.

9. Composition polyorganosiloxane stable au stockage en absence d'humidité et/ou d'oxygène gazeux et réticulable en un élastomère par l'humidité atmosphérique et/ou par l'oxygène de l'air et éventuellement en chauffant, caractérisée en ce qu'elle comprend, en poids :
1. - 100 parties d'au moins un polyorganosiloxane chosi parmi ceux selon les revendications 1 à 5 ci-avant,
2. - une quantité catalytiquement efficace d'un catalyseur métallique de durcissement,
3. - 0 à 250 parties d'au moins une charge minérale, ladite composition pouvant réticuler sous l'action de l'humidité atmosphérique uniquement lorsqu'il reste des groupements hydrolysables X dans les polyorganosiloxanes selon les revendications 1 à 5.

10. Composition selon la revendication 9, caractérisée en ce qu'elle comporte en outre, pour 100 parties de polyorganosiloxane (1) :
+ de 1 à 30 parties d'huile du type polydiorganosiloxane non réactive, de formule : 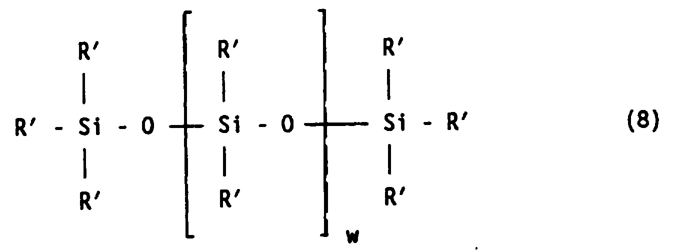 dans laquelle :
- R′ est choisi parmi les radicaux alkyles, linéaires ou ramifiés, ayant de 1 à 12 atomes de carbone et un radical phényle éventuellement substitué par un ou plusieurs radicaux alkyles inférieurs ;
- w est un nombre entier ou fractionnaire choisi de telle sorte que le polymère de formule (8) présente une viscosité à 25 °C inférieure à 100 000 mPa.s ;
+ et/ou 0,2 à 10 parties d'un agent d'adhérence.

## Patentansprüche

1. Polyorganosiloxan-Polymer, dadurch gekennzeichnet, daß es ein Polysiloxan (P₁), das pro Molekül mindestens eine Struktureinheit der Formel (1) 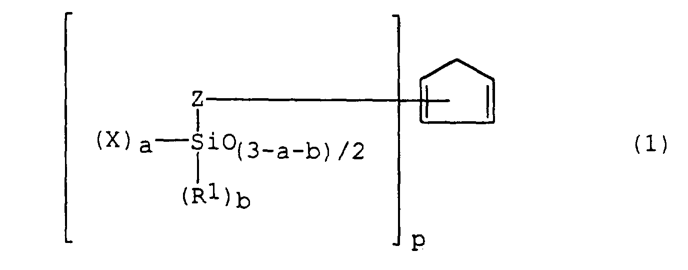 aufweist, und/oder ein Polysiloxan (P)₂ umfaßt, das pro Molekül mindestens eine Struktureinheit der Formel (1') 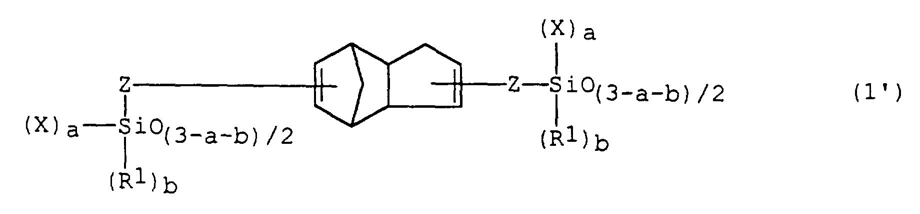 aufweist, worin
- X, gleich oder verschieden, hydrolysierbare Gruppen darstellt, ausgewählt unter einem Halogenatom und unter den Resten N-Amino substituiert, N-Amido substituiert, N,N-Amino disubstituiert, Cetiminoxy, Aldiminoxy, Alkoxy, Acyloxy, Enoxy, Alkoxyalkylenoxy,
- R¹, gleich oder verschieden, monovalente Kohlenwasserstoffgruppen mit 1 bis 10 Kohlenstoffatomen darstellt, gegebenenfalls substituiert durch Halogenatome oder Cyangruppen,
- Z einen gesättigten divalenten, linearen oder verzweigten Kohlenwasserstoffrest mit 1 bis 10 Kohlenstoffatomen bedeutet,
- a null, 1 oder 2 ist,
- b null, 1 oder 2 ist,
- a + b höchstens gleich 2 ist,
- p gleich 1 oder 2 ist,
- das Polysiloxan (P₁) pro Molekül mindestens eine Struktureinheit (1) aufweist, wenn a verschieden von null ist und mindestens zwei Struktureinheiten (1), wenn a gleich null ist.

2. Polyorganosiloxan-Polymer nach Anspruch 1, dadurch gekennzeichnet, daß das Polysiloxan der Formel (1) und/oder (1') außerdem andere Siloxyl-Struktureinheiten umfaßt, die der Formel (2)
(R¹)_{c} SiO_{(4-c)/2}
entsprechen, in der
- R¹ die gleiche Bedeutung wie oben angegeben besitzt,
- c unter null, 1, 2 und 3 ausgewählt wird.

3. Polyorganosiloxan nach irgendeinem der vorstehenden Ansprüche, dadurch gekennzeichnet, daß es unter den statistischen, sequenzierten oder Block-Diorganopolysiloxan-Copolymeren der mittleren Formel (3) 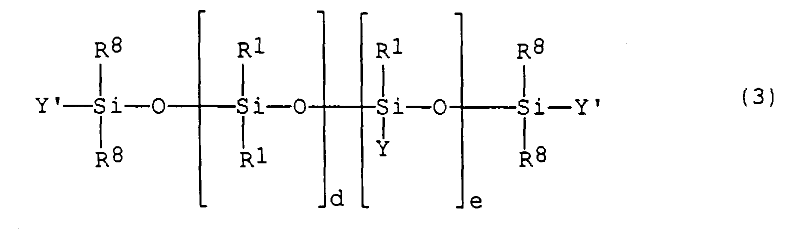 ausgewählt wird, in der
- Y die Gruppe 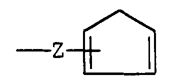 darstellt, in der die Bedeutung von Z oben angegeben wurde,
- R¹ und X die gleiche Bedeutung wie oben angegeben besitzen,
- Y' unter den Resten Y, R¹ und Hydroxyl ausgewählt wird,
- R⁸ unter einem Rest R¹ und einem Rest X ausgewählt wird,
- d eine Zahl zwischen 0 und 1000 ist,
- e eine ganze Zahl zwischen 0 und 50 ist,
- wenn e = 0 ist die zwei Reste Y' gleich Y sind,
und unter denen der Formel (4) 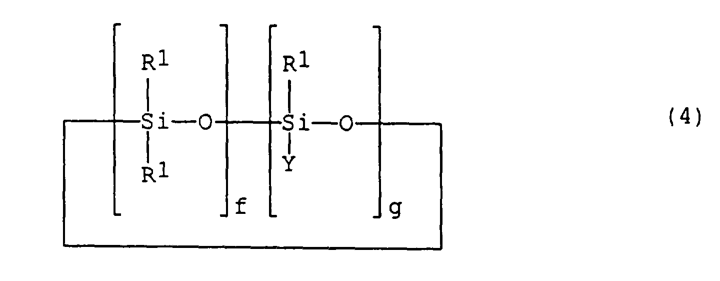 ausgewählt wird, in der
- R¹ und Y die oben angegebene Bedeutung besitzen,
- f eine ganze Zahl zwischen 0 und einschließlich 9 ist,
- g eine ganze Zahl zwischen 1 und einschließlich 9 ist,
- f + g zwischen 3 und einschließlich 10 beträgt.

4. Polyorganosiloxan-Polymer nach irgendeinem der Ansprüche 1 oder 2, dadurch gekennzeichnet, daß es ausgewählt wird unter
. den Polysiloxanen der Formel (3') 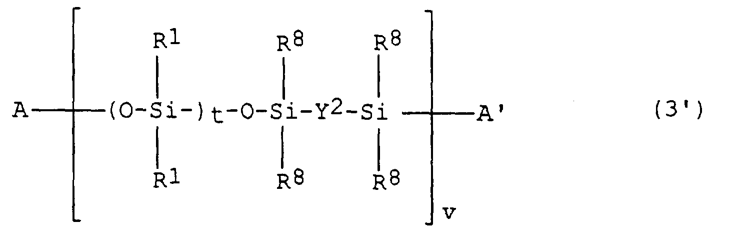 worin
- Y eine Gruppe 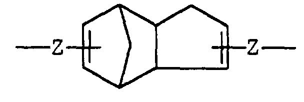 bedeutet, worin
- Z die oben angegebene Bedeutung besitzt,
- R¹ die oben angegebene Bedeutung besitzt,
- R⁸ unter einem Rest R¹ und einem Rest X ausgewählt wird, deren Bedeutung oben angegeben wurde,
- A ausgewählt wird unter :
. einem Wasserstoffatom,
. einer Gruppe R¹₃Si-, wobei die Bedeutung von R¹ oben angegeben wurde,
. einer Gruppe 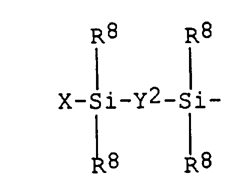
wobei die Bedeutungen von R⁸, Y und X oben angegeben wurden,
- A' ausgewählt wird unter
. dem Rest X, dessen Bedeutung oben angegeben wurde,
. der Gruppe 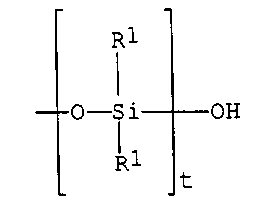 in der das Wasserstoffatom der Hydroxylgruppe gegebenenfalls durch eine Gruppe R¹₃Si- ersetzt werden kann,
- t zwischen 5 und 1000 beträgt, Grenzwerte eingeschlossen,
- v zwischen 1 und 200 beträgt, Grenzwerte eingeschlossen, und zwischen 2 und 200, wenn A unter einem Wasserstoffatom oder einer Gruppe R¹₃Si- ausgewählt wird,
. und/oder den Polysiloxanen der Formel (3"') 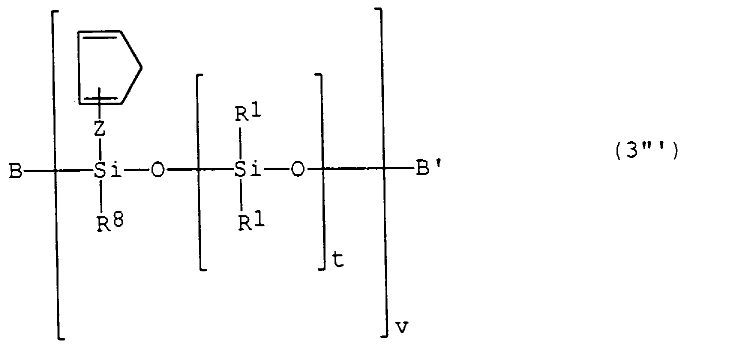 in der
- Z die gleiche Bedeutung wie oben angegeben besitzt,
- B ausgewählt wird unter
. R⁸ wie oben definiert,
. der Gruppe 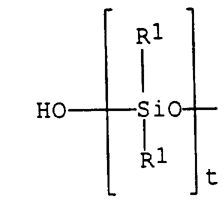
- B' ausgewählt wird unter
. dem Wasserstoffatom,
. einer Gruppe R¹₃Si-,
. einer Gruppe 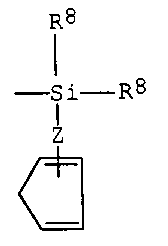
- t zwischen 5 und 1000 beträgt, Grenzwerte eingeschlossen,
- v zwischen 1 und 200 beträgt, Grenzwerte eingeschlossen, und zwischen 2 und 200, wenn B' ein Wasserstoffatom oder eine Gruppe R¹₃Si- darstellt,
. und/oder den Polysiloxanen der Formel (3"") 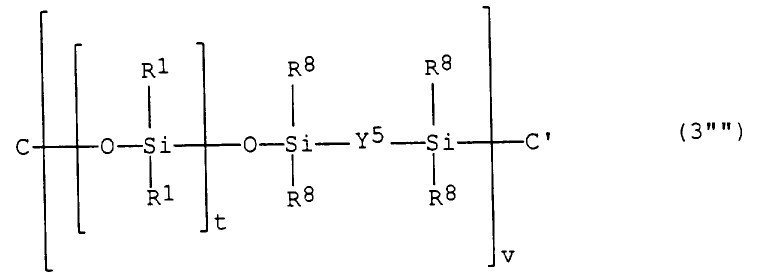 in der
- Y⁵ eine Gruppe 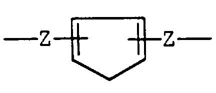 darstellt, worin Z die oben angegebene Bedeutung besitzt,
- R¹ und R⁸ die gleiche Bedeutung wie oben angegeben besitzen,
- C ausgewählt wird unter
. einem Wasserstoffatom,
. einer Gruppe R¹₃Si-,
. einer Gruppe 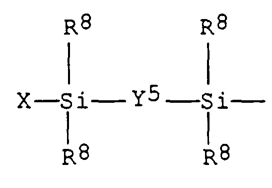
- C' ausgewählt wird unter
. dem Rest X, dessen Bedeutung oben angegeben wurde,
. der Gruppe 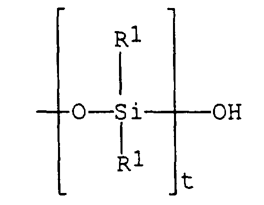 in der das Wasserstoffatom der Hydroxylgruppe gegebenenfalls durch eine Gruppe R¹₃Si- ersetzt werden kann,
- t zwischen 5 und 1000 beträgt, Grenzwerte eingeschlossen,
- v zwischen 1 und 200 beträgt, Grenzwerte eingeschlossen, und zwischen 2 und 200, wenn C unter einem Wasserstoffatom oder einer Gruppe R¹₃Si- ausgewählt wird.

5. Polyorganosiloxan-Polymer nach irgendeinem der Ansprüche 1 bis 3, dadurch gekennzeichnet, daß es ein Polysiloxan der Formel (3") 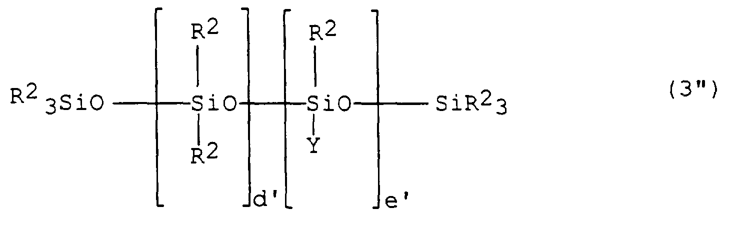 umfaßt, in der
- Y die Gruppe 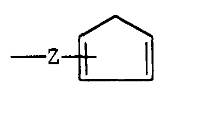 darstellt, worin Z eine Kohlenwasserstoffgruppe mit 1 bis 10 Kohlenstoffatomen, vorzugsweise mit 3 Kohlenstoffatomen bedeutet,
- R, gleich oder verschieden, monovalente Kohlenwasserstoffgruppen mit 1 bis 10 Kohlenstoffatomen darstellt,
- d' eine Zahl zwischen 10 und 1000 ist,
- e' eine Zahl zwischen 2 und 50 ist.

6. Verfahren zur Herstellung des Polyorganosiloxans der Formel (3") nach Anspruch 5, dadurch gekennzeichnet, daß man ein Polyorganosiloxan der Formel 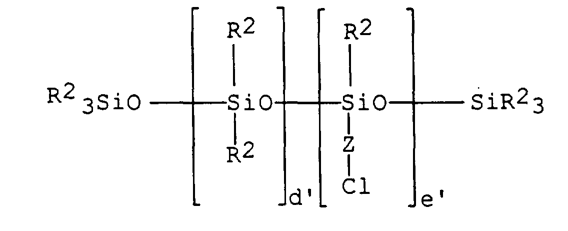 mit Natriumcyclopentadienyl zur Reaktion bringt.

7. Verfahren zur Herstellung der Polysiloxane nach Anspruch 1 bis 3, dadurch gekennzeichnet, daß man Silane der Formel 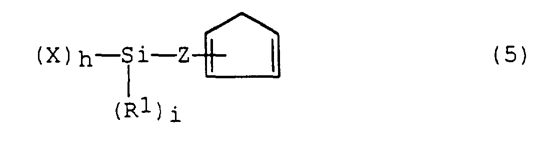 und/oder Silane der Formel 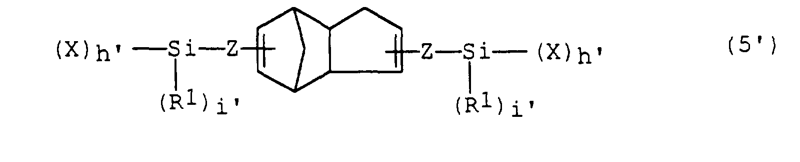 und/oder Silane der Formel 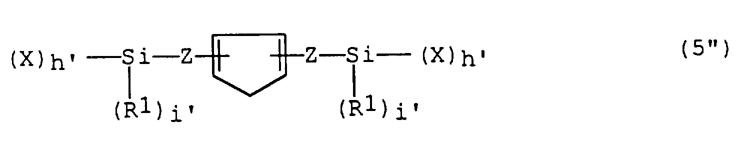
- gegebenenfalls in Anwesenheit eines Halogensilans, vorzugsweise eines Chlorsilans der Formel (6)
(R¹)ⱼ (Cl)ₖ Si (6)
in der
- Z, R¹ und X die oben angegebenen Bedeutungen besitzen,
- h zwischen 2 und 3 gewählt wird,
- i zwischen null und 1 gewählt wird,
- h + i = 3 beträgt,
- i' zwischen null, 1 oder 2 gewählt wird,
- h' zwischen 1, 2 oder 3 gewählt wird,
- i' + h' = 3 beträgt,
- j zwischen null, 1, 2 oder 3 gewählt wird,
- k zwischen 1, 2, 3 oder 4 gewählt wird,
- j + k = 4 beträgt,
hydrolysiert und polykondensiert.

8. Verfahren zur Herstellung von Polyorganosiloxan-Polymeren nach Anspruch 4, dadurch gekennzeichnet, daß man
- ein lineares Polydiorganosiloxan der Formel (7) 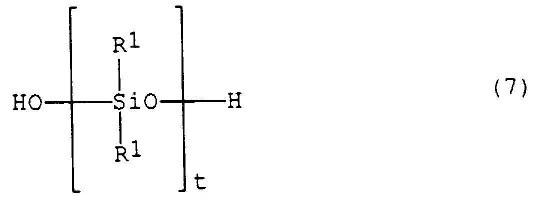 worin
- t zwischen 5 und 1000 beträgt, Grenzwerte eingeschlossen,
- R¹ die gleiche Bedeutung wie oben angegeben besitzt, mit mindestens einem Silan, ausgewählt unter denen der Formeln (5), (5') und (5") nach Anspruch 7, zur Reaktion bringt.

9. Polyorganosiloxan-Zusammensetzung, die bei Abwesenheit von Feuchtigkeit und/oder gasförmigem Sauerstoff lagerstabil und durch atmosphärische Feuchtigkeit und/oder Luftsauerstoff, gegebenenfalls unter Erwärmung, zu einem Elastomer aushärtbar ist, dadurch gekennzeichnet, daß sie in Gewicht umfaßt:
1. - 100 Teile von mindestens einem Polyorganosiloxan, ausgewählt unter denen der obigen Ansprüche 1 bis 5,
2. - eine katalytisch wirksame Menge eines metallischen Härtungskatalysators,
3. - 0 bis 250 Teile von mindestens einem mineralischen Füllstoff, wobei die genannte Zusammensetzung unter Einwirkung von lediglich atmosphärischer Feuchtigkeit aushärten kann, wenn hydrolysierbare Gruppen X in den Polyorganosiloxanen nach Anspruch 1 bis 5 verbleiben.

10. Zusammensetzung nach Anspruch 9, dadurch gekennzeichnet, daß sie außerdem pro 100 Teile Polyorganosiloxan (1) umfaßt:
+ 1 bis 30 Teile eines nicht reaktiven Polydiorganosiloxan-Öles der Formel (8) 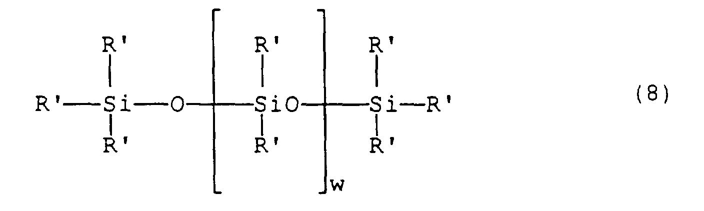 in der
- R' unter den linearen oder verzweigten Alkylresten mit 1 bis 12 Kohlenstoffatomen und einem Phenylrest, gegebenenfalls substituiert durch einen oder mehrere niedere Alkylreste, ausgewählt wird;
- w eine ganze oder gebrochene Zahl in der Weise bedeutet, daß das Polymer der Formel (8) eine Viskosität bei 25 °C von unter 100.000 mPa˙s aufweist;
+ und/oder 0,2 bis 10 Teile eines Haftmittels.

## Claims

1. Polyorganosiloxane polymer, characterized in that it comprises a polysiloxane (P₁) having, per molecule, at least one unit of formula: 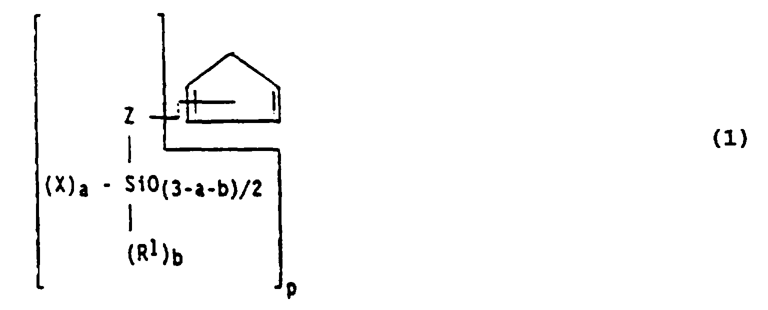 and/or a polysiloxane (P₂) having, per molecule, at least one unit of formula: 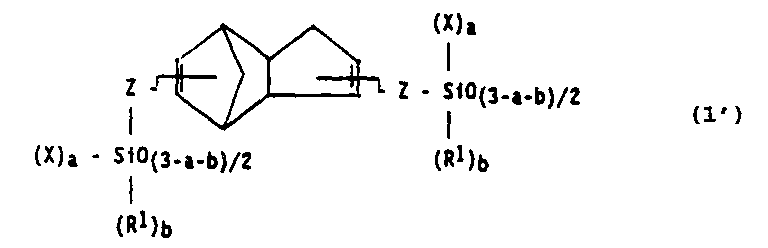 in which formulae:
- X, which may be identical or different, represent hydrolysable groups chosen from a halogen atom and from N-substituted amino, N-substituted amido, N,N-disubstituted amino, ketiminoxy, aldiminoxy, alkoxy, acyloxy, enoxy and alkoxyalkyleneoxy radicals,
- R¹, which may be identical or different, represent monovalent hydrocarbon groups having from 1 to 10 carbon atoms and optionally substituted by halogen atoms or cyano groups,
- Z is a linear or branched divalent saturated hydrocarbon radical having from 1 to 10 carbon atoms,
- a is zero, 1 or 2,
- b is zero, 1 or 2,
- a + b is at most 2, and
- p is 1 or 2,
- the polysiloxane (P₁) having, per molecule, at least one unit (1) if a differs from zero and at least two units (1) if a is zero.

2. Polyorgansiloxane polymer according to Claim 1, characterized in that the polysiloxane of formula (1) and/or (1') also contains other siloxyl units corresponding to the formula:
(R¹)_{c} SiO_{(4-c)/2} (2)
in which:
- R¹ has the same meaning as that defined above, and
- c is chosen from zero, 1, 2 and 3.

3. Polyorganosiloxane according to either of the preceding claims, characterized in that it is chosen from random, sequenced or block diorganopolysiloxane copolymers of average formula 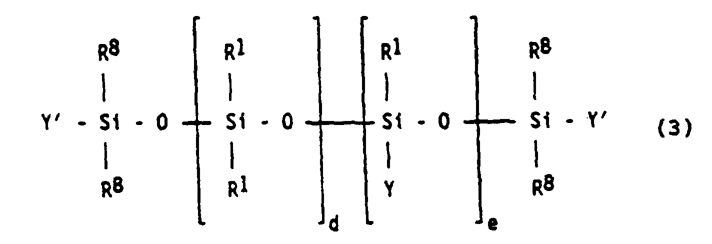 in which:
- Y represents the group - 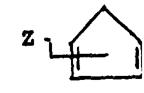 in which the meaning of Z has been given above,
- R¹ and X have the same meaning as that given above,
- Y' is chosen from Y, R¹ and hydroxyl radicals,
- R⁸ is chosen from an R¹ radical and an X radical,
- d is a number between 0 and 1000,
- e is a integer between 0 and 50, and
- if e = 0 the two radicals Y' are Y and from those of formula 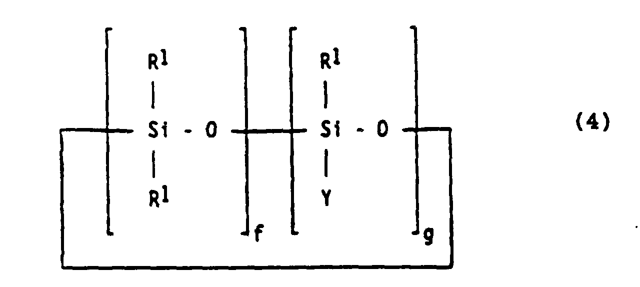 in which:
- R¹ and Y have the meaning given above,
- f is an integer between 0 and 9 inclusive,
- g is an integer between 1 and 9 inclusive, and
- f + g is between 3 and 10 inclusive.

4. Polyorganosiloxane polymer according to either of Claims 1 or 2, characterized in that it is chosen from:
. polysiloxanes having the formula: 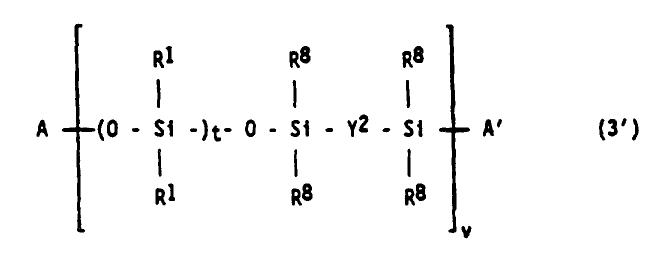 in which:
- Y represents a group 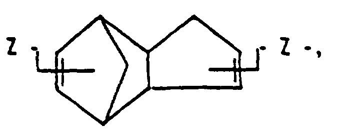 the meaning of Z having been defined above,
- R¹ has the meaning given above,
- R⁸ is chosen from an R¹ radical and an X radical, the meaning of which has been given above,
- A is chosen from:
• a hydrogen atom,
• a group R¹₃Si -, the meaning of R¹ having been given above, and
• a group 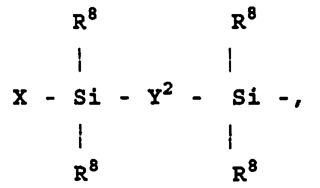 the meanings of R⁸, Y and X having been given above,
- A' is chosen from:
. the radical X, the meaning of which has been given above, and
. the group 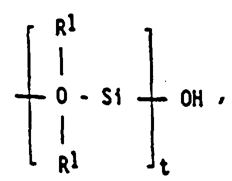 in which the
hydrogen atom of the hydroxyl group may optionally be replaced by a group R¹₃Si-,
- t is between 5 and 1000 inclusive, and
- v is between 1 and 200 inclusive, and
between 2 and 200 if A is chosen from a hydrogen atom, or a group R¹₃Si,
. and/or the polysiloxanes having the formula 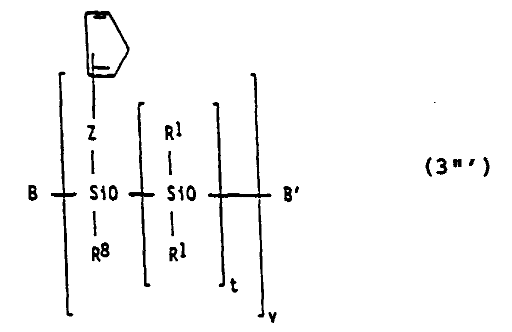 in which:
- Z has the same meaning as above,
- B is chosen from:
• R⁸ defined above, and 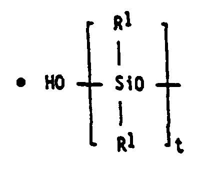
- B' is chosen from:
• a hydrogen atom,
• a group R¹₃Si-, and
• 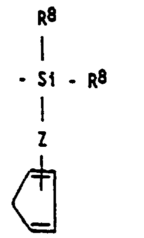
- t is between 5 and 1000 inclusive, and
- v is between 1 and 200 inclusive,
v being between 2 and 200 if B' represents a hydrogen atom or a group R¹₃Si,
. and/or the polysiloxanes having the formula 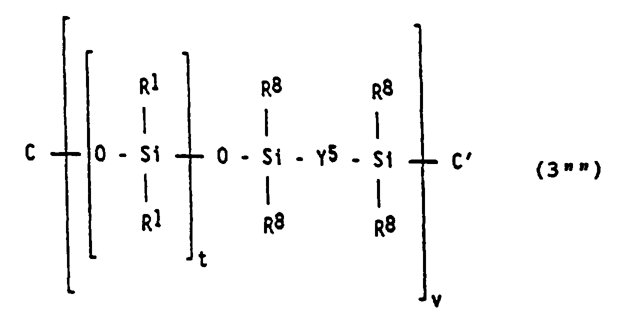 in which:
- Y⁵ represents a group 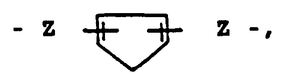 the meaning of Z having been defined above,
- R¹ and R⁸ have the same meanings as above,
- C is chosen from:
• a hydrogen atom,
• a group R¹₃Si-, and
• a group 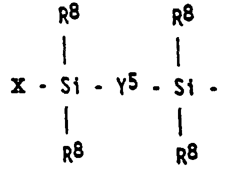
- C' is chosen from:
• the radical X, the meaning of which has been given above, and
• the group 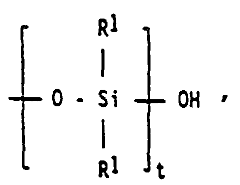 in which the hydrogen atom of the hydroxyl group may optionally be replaced by a group R¹₃Si-,
- t is between 5 and 1000 inclusive, and
- v is between 1 and 200 inclusive and
between 2 and 200 if C is chosen from a hydrogen atom or a group R¹₃Si.

5. Polyorganosiloxane polymer according to any one of Claims 1 to 3, characterized in that it comprises, a polysiloxane of formula: 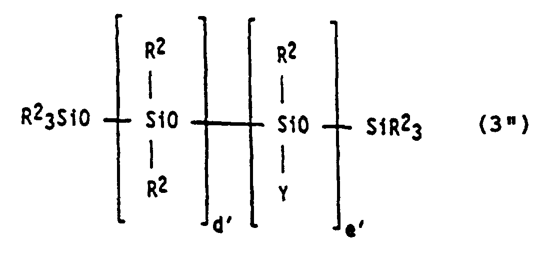 in which :
- Y represents the group 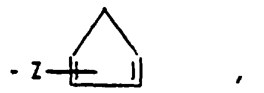 in which Z is a hydrocarbon group having from 1 to 10 carbon atoms and preferably 3 carbon atoms,
- R, which may be identical or different, represent monovalent hydrocarbon groups having from 1 to 10 carbon atoms,
- d³ is a number between 10 and 1000, and
- e' is between 2 and 50.

6. Process for the preparation of the polyorganosiloxane of formula (3") according to Claim 5, characterized in that a polyorganosiloxane of formula: 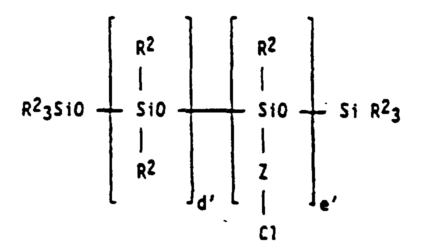 is reacted with cyclopentadienylsodium.

7. Process for the preparation of the polysiloxanes according to Claims 1 to 3, characterized in that silanes of formula: 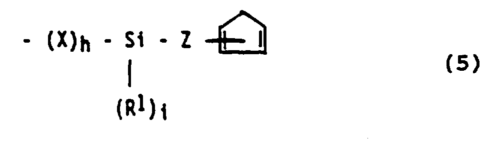 and/or silanes of formula: 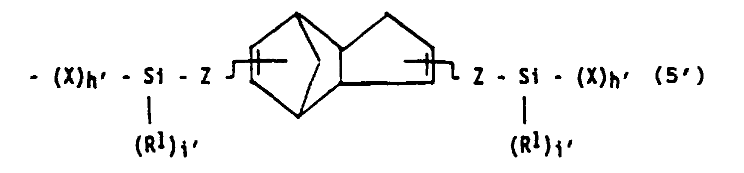
- and/or silanes of formula: 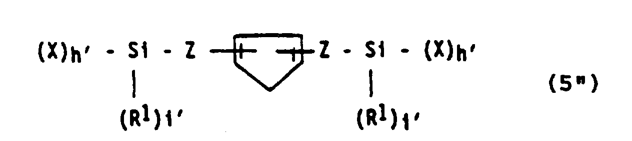 are hydrolysed and polycondensed,
- optionally in the presence of a halosilane, preferably a chlorosilane of formula:
(R¹)ⱼ (Cl)ₖ Si (6)
in which formulae:
- Z, R¹ and X have the same meanings as those given above,
- h is chosen from 2 and 3,
- i is chosen from zero and 1,
- h + i = 3,
- i' is chosen from zero, 1 or 2,
- h' is chosen from 1, 2 or 3,
- i' + h' = 3,
- j is chosen from zero, 1, 2 or 3,
- k is chosen from 1, 2, 3 or 4, and
- j + k = 4.

8. Process for the preparation of polyorganosiloxane polymers according to Claim 4, characterized in that
- a linear polydiorganosiloxane having the formula 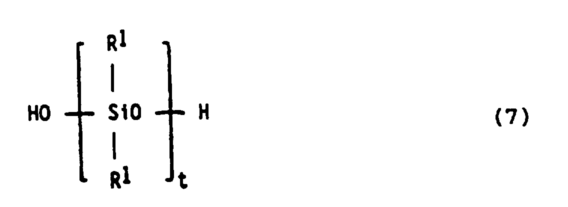
- t is between 5 and 1000 inclusive, and
- the meaning of R¹ is the same as that given above,
is reacted with
- at least one silane chosen from those of formulae (5), (5') and (5") according to Claim 7.

9. Polyorganosiloxane composition which is stable on storage in the absence of moisture and/or gaseous oxygen and which can be crosslinked to form an elastomer by means of atmospheric moisture and/or atmospheric oxygen and if necessary by heating, characterized in that it comprises, by weight:
1. - 100 parts of at least one polyorganosiloxane chosen from those according to Claims 1 to 5 above,
2. - a catalytically effective amount of a metal curing catalyst, and
3. - 0 to 250 parts of at least one inorganic filler,
the said composition being capable of crosslinking under the action of atmospheric moisture only when hydrolysable groups X remain in the polyorganosiloxanes according to Claims 1 to 5.

10. Composition according to Claim 9, characterized in that it also contains, per 100 parts of polyorganosiloxane (1):
+ from 1 to 30 parts of unreactive oil of the polydiorganosiloxane type, of formula: 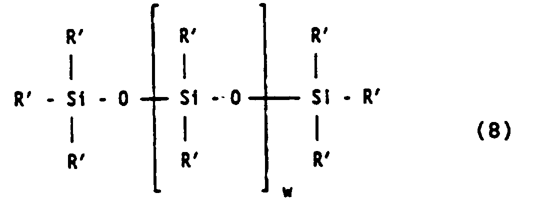 in which:
- R' is chosen from linear or branched alkyl radicals having from 1 to 12 carbon atoms and a phenyl radical optionally substituted by one or more lower alkyl radicals;
- w is an integer or fraction chosen such that the polymer of formula (8) has a viscosity at 25°C of less than 100,000 mPas;
+ and/or 0.2 to 10 parts of an adhesion promoter.
